# EUROPEAN PATENT APPLICATION

(11) **EP 4 546 793 A1**
(43) Date of publication of application: **30.04.2025**
(21) Application number: 23829763.4
(22) Date of filing: 15.05.2023
(51) Int. Cl.: H04N 21/232, H04N 7/18, H04N 5/76, G06Q 10/08

(54) **VIDEO QUERY METHOD AND APPARATUS, AND LOGISTICS MONITORING SYSTEM, DEVICE AND PROGRAM PRODUCT**

(30) Priority: 27.06.2022 CN 202210742010
(71) Applicant: Hangzhou Hikvision Digital Technology Co., Ltd., Hangzhou, Zhejiang 310051 (CN)
(72) Inventor: ZHU, Shuaibo, Hangzhou, Zhejiang 310051 (CN)
(74) Representative: Epping - Hermann - Fischer
(86) International application number: PCT/CN2023/094240
(87) International publication number: WO 2024/001577

(57) **Abstract**

A video query method and apparatus, and a logistics monitoring system, a device and a program product. The method comprises: acquiring an identifier to be queried; determining, from order information of pre-recorded orders, an acquisition time of the first order information corresponding to a target order, and taking the acquisition time as a processing start time; determining an acquisition time of the last order information corresponding to the target order, and taking the acquisition time as a processing end time; and acquiring, on the basis of the processing start time and the processing end time, a monitoring video corresponding to the target order. By means of order information of pre-recorded orders, a processing start time and a processing end time of an order to which an identifier to be queried belongs can be determined, such that a monitoring video corresponding to the order to which the identifier to be queried belongs can be acquired. A monitoring video corresponding to a target order that a user wants to query can be acquired without the need for manual query, watching and interception, thereby greatly improving the video query efficiency.

## Description

The present application claims the priority to a Chinese patent application 202210742010.7 filed with the China National Intellectual Property Administration (CNIPA) on June 27, 2022 and entitled "VIDEO QUERY METHOD AND APPARATUS, AND LOGISTICS MONITORING SYSTEM, DEVICE AND PROGRAM PRODUCT", which is incorporated herein by reference in its entirety.

### Technical Field

The present application relates to the technical field of logistics monitoring, in particular to a video query method and apparatus, and a logistics monitoring system, a device and a program product.

### Background

With the vigorous development of the e-commerce industry, the warehouse logistics industry has also developed rapidly. In a procedure of processing items included in orders, for example, in a procedure of packaging, transferring, unloading the items, etc., the worker can acquire information corresponding to item identifiers and/or order identifiers; at the same time, a monitoring device can record a video of the procedure of processing by the worker, to obtain a monitoring video.

When receiving a complaint of abnormal quantity or status of item(s) from a user, a manager can query, according to an item identifier or an order identifier provided by the user, an acquisition time point corresponding to the identifier, and then manually search for a monitoring video corresponding to the acquisition time point, and manually cut out a duration of monitoring video comprising the acquisition time point as an evidence video and feed it back to the user.

In the above video acquisition method, the manager needs to manually query, view and cut out the corresponding monitoring video, causing a low efficiency of video query.

### Summary

The purpose of the embodiments of the present application is to provide a video query method, apparatus, a logistics monitoring system, a device and a program product for improving the efficiency of video query. The specific technical solutions are as follows:
In a first aspect, an embodiment in the present application provides a video query method, the method includes:
acquiring a to-be-queried identifier, wherein the to-be-queried identifier is an item identifier or an order identifier;
determining, from pre-recorded pieces of order information of orders, an acquisition time of a first piece of order information corresponding to a target order as a processing start time, wherein the target order is an order to which the to-be-queried identifier belongs, and a piece of order information for an order comprises a piece of information corresponding to an item identifier belonging to the order and/or a piece of information corresponding to an order identifier belonging to the order;
determining an acquisition time of a last piece of order information corresponding to the target order as a processing end time;
acquiring a monitoring video corresponding to the target order based on the processing start time and the processing end time.

Optionally, the first piece of order information is a piece of order information next to a piece of end identification information with a latest acquisition time prior to an acquisition time of a piece of information corresponding to the to-be-queried identifier, and the first piece of order information has an acquisition time later than the acquisition time of said piece of end identification information, wherein, a piece of end identification information is used to indicate a completion of acquiring all pieces of order information of any order; or, the first piece of order information is a piece of order information with a later acquisition time in target adjacent pieces of order information with a latest acquisition time prior to an acquisition time of a piece of information corresponding to the to-be-queried identifier, wherein the target adjacent pieces of order information are two adjacent pieces of order information with an acquisition time interval greater than a first preset interval; and/or,
the last piece of order information is a piece of end identification information with an earliest acquisition time after an acquisition time of a piece of information corresponding to the to-be-queried identifier; or, the last piece of order information is a piece of order information with an earlier acquisition time in target adjacent pieces of order information with an earliest acquisition time after an acquisition time of a piece of information corresponding to the to-be-queried identifier.

Optionally, the step of determining, from the pre-recorded pieces of order information of the orders, the acquisition time of the first piece of order information corresponding to the target order as the processing start time, comprises:
determining all pieces of first order information within a first preset duration before the acquisition time of the piece of information corresponding to the to-be-queried identifier;
determining whether each piece of first order information is the piece of end identification information according to a time sequence of acquisition times from late to early;
if the piece of first order information is the piece of end identification information, determining an acquisition time of a piece of first target order information as the processing start time, wherein the piece of first target order information is a piece of order information with an earliest acquisition time in pieces of order information with acquisition times later than that of the piece of first order information;
if the piece of first order information is not the piece of end identification information, determining whether an acquisition time interval between the piece of first order information and the piece of first target order information is greater than the first preset interval;
if the acquisition time interval is greater than the first preset interval, determining the acquisition time of the piece of first target order information as the processing start time; and/or,
the step of determining the acquisition time of the last piece of order information corresponding to the target order as the processing end time, comprises:
   determining all pieces of second order information within a first preset duration after the acquisition time of the piece of information corresponding to the to-be-queried identifier;
   determining whether each piece of second order information is the piece of end identification information according to a time sequence of acquisition times from early to late;
   if the piece of second order information is the piece of end identification information, determining an acquisition time of a piece of second target order information as the processing end time;
   if the piece of second order information is not the piece of end identification information, determining whether an acquisition time interval between the piece of second order information and the piece of second target order information is greater than the first preset interval, wherein the piece of second target order information is a piece of order information with a latest acquisition time in pieces of order information with acquisition times earlier than that of the piece of second order information;
   if the acquisition time interval is greater than the first preset interval, determining the acquisition time of the piece of second target order information as the processing end time.

Optionally, a pre-recorded piece of order information of an order is a piece of scanning code information of an item identifier and/or a piece of scanning code information of an order identifier acquired during a procedure of processing an item comprised in the order, an acquisition time of a piece of order information is a scanning time of a corresponding piece of scanning code information.

Optionally, the piece of end identification information is a piece of scanning code information of an end code set on a processing table for processing the item.

Optionally, an item comprised in the order is processed on a processing table, and the piece of order information is associated with the processing table processing the order;
prior to the step of determining, from the pre-recorded pieces of order information of the orders, the acquisition time of the first piece of order information corresponding to the target order, the method further comprises:
searching for a target processing table associated with the piece of information corresponding to the to-be-queried identifier;
acquiring pre-recorded pieces of order information of orders processed at the target processing table.

Optionally, the processing table is associated with multiple monitoring devices, and the step of acquiring the monitoring video corresponding to the target order based on the processing start time and the processing end time, comprises:
determining multiple monitoring devices corresponding to the target processing table associated with the piece of information corresponding to the to-be-queried identifier;
acquiring monitoring videos captured by the multiple monitoring devices based on the processing start time and the processing end time;
the method further comprises:
   playing the monitoring videos by applying a multi-playing windows playing mode, or, sending the monitoring videos to a playing device to cause the playing device to play the monitoring videos in a multi-playing windows playing mode, wherein each playing window is configured to play a video captured by a corresponding monitoring device.

Optionally, the processing table comprises a packaging table for packaging the item comprised in the order.

Optionally, the step of acquiring the monitoring video corresponding to the target order based on the processing start time and the processing end time, comprises:
acquiring a monitoring video from a video recording start time to a video recording end time from a pre-stored monitoring video, wherein the video recording start time is obtained by subtracting a first threshold from the processing start time, and/or, the video recording end time is obtained by adding a second threshold to the processing end time.

Optionally, the method further includes:
playing the monitoring video starting from the processing start time and displaying a playing progress bar; playing, when a playing progress adjustment instruction for the playing progress bar is acquired, a monitoring video at a time corresponding to the playing progress bar after the playing progress adjustment instruction is executed, wherein a duration corresponding to the playing progress bar is from the video recording start time to the video recording end time, and the time corresponding to the playing progress bar after the playing progress adjustment instruction is executed is located between the video recording start time and the video recording end time; or,
controlling the playing device to play the monitoring video starting from the processing start time and displaying a playing progress bar, so that when a playing progress adjustment instruction for the playing progress bar is acquired, the playing device plays a monitoring video at a time corresponding to the playing progress bar after the playing progress adjustment instruction is executed.

In a second aspect, an embodiment of the present application provides a video query apparatus, the apparatus includes:
a to-be-queried identifier acquiring module, configured for acquiring a to-be-queried identifier, wherein the to-be-queried identifier is an item identifier or an order identifier;
a processing start time determination module, configured for determining, from pre-recorded pieces of order information of orders, an acquisition time of a piece of first order information corresponding to a target order as a processing start time, wherein the target order is an order to which the to-be-queried identifier belongs, and a piece of order information for an order comprises a piece of information corresponding to an item identifier belong to the order and/or a piece of information corresponding to an order identifier belong to the order;
a processing end time determination module, configured for determining an acquisition time of a last piece of order information corresponding to the target order as a processing end time;
a video acquiring module, configured for acquiring a monitoring video corresponding to the target order based on the processing start time and the processing end time.

Optionally, the first piece of order information is a piece of order information next to a piece of end identification information with a latest acquisition time prior to an acquisition time of a piece of information corresponding to the to-be-queried identifier, and the first piece of order information has an acquisition time later than the acquisition time of said piece of end identification information, wherein, a piece of end identification information is used to indicate a completion of acquiring all pieces of order information of any order; or, the first piece of order information is a piece of order information with a later acquisition time in target adjacent pieces of order information with a latest acquisition time prior to an acquisition time of a piece of information corresponding to the to-be-queried identifier, wherein the target adjacent pieces of order information are two adjacent pieces of order information with an acquisition time interval greater than a first preset interval; and/or,
the last piece of order information is a piece of end identification information with an earliest acquisition time after an acquisition time of a piece of information corresponding to the to-be-queried identifier; or, the last piece of order information is a piece of order information with an earlier acquisition time in target adjacent pieces of order information with an earliest acquisition time after an acquisition time of a piece of information corresponding to the to-be-queried identifier.

Optionally, the processing start time determination module comprises:
a first order information determination unit, configured for determining all pieces of first order information within a first preset duration before the acquisition time of the piece of information corresponding to the to-be-queried identifier;
a first end identification information determination unit, configured for determining whether each piece of first order information is the piece of end identification information according to a time sequence of acquisition times from late to early;
a first processing start time determination unit, configured for, if the piece of first order information is the piece of end identification information, determining an acquisition time of a piece of first target order information as the processing start time, wherein the piece of first target order information is a piece of order information with an earliest acquisition time in pieces of order information with acquisition times later than that of the piece of first order information;
a first judgment unit, configured for, if the piece of first order information is not the piece of end identification information, determining whether an acquisition time interval between the piece of first order information and the piece of first target order information is greater than the first preset interval;
a second processing start time determination unit, configured for, if the acquisition time interval is greater than the first preset interval, determining the acquisition time of the piece of first target order information as the processing start time; and/or,
the processing end time determination module comprises:
   a second order information determination unit, configured for determining all pieces of second order information within a first preset duration after the acquisition time of the piece of information corresponding to the to-be-queried identifier;
   a second end identification information determination unit, configured for determining whether each piece of second order information is the piece of end identification information according to a time sequence of acquisition times from early to late;
   a first processing end time determination unit, configured for, if the piece of second order information is the piece of end identification information, determining an acquisition time of a piece of second target order information as the processing end time;
   a second judgment unit, configured for, if the piece of second order information is not the piece of end identification information, determining whether an acquisition time interval between the piece of second order information and the piece of second target order information is greater than the first preset interval, wherein the piece of second target order information is a piece of order information with a latest acquisition time in pieces of order information with acquisition times earlier than that of the piece of second order information;
   a second processing end time determination unit, configured for, if the acquisition time interval is greater than the first preset interval, determining the acquisition time of the piece of second target order information as the processing end time.

Optionally, a pre-recorded piece of order information of an order is a piece of scanning code information of an item identifier and/or a piece of scanning code information of an order identifier acquired during a procedure of processing an item comprised in the order, the piece of end identification information is a piece of scanning code information of an end code set on a processing table for processing the item, an acquisition time of a piece of order information is a scanning time of a corresponding piece of scanning code information.

Optionally, an item comprised in the order is processed on a processing table, and the piece of order information is associated with the processing table processing the order; the apparatus further comprises:
a target processing table determination module, configured for, prior to the step of determining, from the pre-recorded pieces of order information of the orders, the acquisition time of the first piece of order information corresponding to the target order, searching for a target processing table associated with the piece of information corresponding to the to-be-queried identifier;
an order information acquiring module, configured for acquiring pre-recorded pieces of order information of orders processed at the target processing table.

Optionally, the processing table is associated with multiple monitoring devices, the video acquiring module comprises:
an associated monitoring device determination unit, configured for determining multiple monitoring devices corresponding to the target processing table associated with the piece of information corresponding to the to-be-queried identifier;
a first video acquiring unit, configured for acquiring monitoring videos captured by the multiple monitoring devices based on the processing start time and the processing end time;
the apparatus further comprises:
   a first playing module, configured for playing the monitoring videos by applying a multi-playing windows playing mode, or, sending the monitoring videos to a playing device to cause the playing device to play the monitoring videos in a multi-playing windows playing mode, wherein each playing window is configured to play a video captured by a corresponding monitoring device.

Optionally, the processing table comprises a packaging table for packaging the item comprised in the order.

Optionally, the video acquiring module comprises:
a second video acquiring unit, configured for acquiring a monitoring video from a video recording start time to a video recording end time from a pre-stored monitoring video, wherein the video recording start time is obtained by subtracting a first threshold from the processing start time, and/or, the video recording end time is obtained by adding a second threshold to the processing end time.

Optionally, the apparatus further comprises:
a second playing module, configured for playing the monitoring video starting from the processing start time and displaying a playing progress bar; playing, when a playing progress adjustment instruction for the playing progress bar is acquired, a monitoring video at a time corresponding to the playing progress bar after the playing progress adjustment instruction is executed, wherein a duration corresponding to the playing progress bar is from the video recording start time to the video recording end time, and the time corresponding to the playing progress bar after the playing progress adjustment instruction is executed is located between the video recording start time and the video recording end time; or,
controlling the playing device to play the monitoring video starting from the processing start time and displaying a playing progress bar, so that when a playing progress adjustment instruction for the playing progress bar is acquired, the playing device plays a monitoring video at a time corresponding to the playing progress bar after the playing progress adjustment instruction is executed.

In a third aspect, an embodiment of the present application provides a logistics monitoring system, the system comprises: a monitoring device, a video storage device and a server, wherein:
the monitoring device is configured for monitoring a procedure of processing an item comprised in an order, to obtain a monitoring video, and sending the monitoring video to the video storage device;
the video storage device is configured for receiving the monitoring video and storing the monitoring video;
the server is configured for acquiring a to-be-queried identifier, determining, from pre-recorded pieces of order information of orders, an acquisition time of a first piece of order information corresponding to a target order as a processing start time; determining an acquisition time of a last piece of order information corresponding to the target order as a processing end time; acquiring a monitoring video corresponding to the target order from the video storage device based on the processing start time and the processing end time, wherein the to-be-queried identifier is an item identifier or an order identifier, wherein the target order is an order to which the to-be-queried identifier belongs, and a piece of order information for an order comprises a piece of information corresponding to an item identifier belong to the order and/or a piece of information corresponding to an order identifier belong to the order.

In a fourth aspect, an embodiment of the present application provides an electronic device, comprising a processor and a memory, wherein,
the memory is configured for storing a computer program;
the processor is configured for carrying out the steps of any one of the methods according to the first aspect when executing the program stored in the memory.

In a fifth aspect, an embodiment of the present application provides a computer program product containing instructions, which, when running on a computer, causes the computer to carry out the steps of any one of the methods according to the first aspect.

In a sixth aspect, an embodiment of the present application provides a computer-readable storage medium having a computer program stored thereon, and the computer program, when executed by a processor, carries out the steps of any one of the methods according to the first aspect.

Beneficial effects of the present application embodiments:
In the solutions provided in the embodiments of the present application, a to-be-queried identifier can be acquired, wherein the to-be-queried identifier is an item identifier or an order identifier; an acquisition time of a first piece of order information corresponding to a target order can be determined as a processing start time from pre-recorded pieces of order information of orders, wherein the target order is an order to which the to-be-queried identifier belongs, and the piece of order information for an order comprises a piece of information corresponding to an item identifier belong to the order and/or a piece of information corresponding to an order identifier belong to the order; an acquisition time of a piece of last order information corresponding to the target order is determined as a processing end time; thus, a monitoring video corresponding to the target order can be acquired based on the processing start time and the processing end time. Through the pre-recorded pieces of order information of the orders, the processing start time and the processing end time of the order to which the to-be-queried identifier belongs could be determined, so that the monitoring video corresponding to the order to which the to-be-queried identifier belongs could be acquired. The monitoring video corresponding to the target order that the user wants to query can be acquired without manually querying, viewing and cutting, which greatly improves the efficiency of video query. Of course, the implementation of any product or method of the present application does not necessarily to achieve all the advantages described above.

### Brief Description of the Drawings

The drawings described herein are intended to provide further understanding of the present application and form a part of the same. The schematic embodiments of the present application and their descriptions are used to explain the present application and do not constitute an improper limitation to the present application.
Fig. 1 is a schematic diagram of the logistics monitoring system to which the embodiments of the present application can be applied;
Fig. 2 is a flowchart diagram of a video query method provided by an embodiment of the present application;
Fig. 3 is a schematic diagram of pieces of order information recorded by a server based on the embodiment shown in Fig. 2;
Fig. 4 is a schematic diagram of a monitoring video corresponding to a target order based on the embodiment shown in Fig. 2;
Fig. 5 is a specific flowchart diagram of step S202 in the embodiment shown in Fig. 2;
Fig. 6 is a specific flowchart diagram of step S502 in the embodiment shown in Fig. 5;
Fig. 7 is a specific flowchart diagram of step S203 in the embodiment shown in Fig. 2;
Fig. 8 is a specific flowchart diagram of step S702 in the embodiment shown in Fig. 7;
Fig. 9 is a flowchart diagram of acquiring pieces of order information based on the embodiment shown in Fig. 2;
Fig. 10 is a flowchart diagram of playing monitoring videos based on the embodiment shown in Fig. 2;
Fig. 11 is a schematic diagram of the flowchart diagram of querying a video based on the embodiment shown in Fig. 2;
Fig. 12 is a schematic diagram of a structure of a logistics monitoring system provided by an embodiment of the present application;
Fig. 13 is a schematic diagram of a structure of a video query apparatus provided by an embodiment of the present application;
Fig. 14 is a schematic diagram of another structure of the video query apparatus provided by the embodiment of the present application;
Fig. 15 is a schematic diagram of a structure of a server provided by an embodiment of the present application.

### Detailed Description

In order to make the purpose, technical solutions and advantages of the present application more clearly, the present application is further explained in detail by referring to the drawings and giving embodiment examples. Obviously, the embodiments described are only a part of the embodiments of the present application, but not constitute all embodiments. Based on the embodiments in the present application, all other embodiments obtained by ordinary and skilled persons in the art without creative efforts are within the scope of protection of the present application.

In order to improve the efficiency of video query, the embodiments of the present application provide a video query method and apparatus, a logistics monitoring system, an electronic device, a computer-readable storage medium and a computer program product.

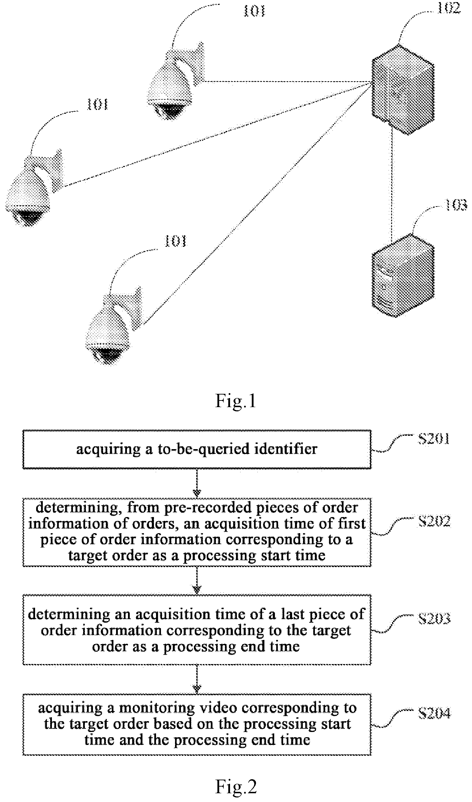

In order to facilitate the understanding of the solutions provided by the embodiments of the application, the logistics monitoring system to which a video query method provided by the embodiment of the application can be applied is firstly introduced in the following. As shown in Fig. 1, the logistics monitoring system can include: a monitoring device 101, a video storage device 102, and a server 103.

The monitoring device 101 can be configured for monitoring a procedure of processing items included in orders, to obtain a monitoring video, and sending the monitoring video to the video storage device 102. The video storage device 102 can be configured for receiving the monitoring video and storing the monitoring video. The server 103 can be configured for executing the video query method provided by the embodiment of the present application.

The monitoring device 101 can be a video shooting device such as a video camera, a monitoring dome camera, the number of which may be one or more, and can be configured for monitoring the procedure of processing the items included in the orders, to obtain the monitoring video, and sending the monitoring video to the video storage device 102; the video storage device 102 can be a device that can store video such as a NVR (Network Video Recorder), and can be configured for receiving and storing monitoring video; the server 103 can be configured for recording the pieces of order information and perform video query, wherein the pieces of order information can be recorded in the database.

In an implementation, the monitoring device 101 can send a monitoring video to the server 103, and then the server 103 can receive and store the monitoring video, that is, the server functions additionally as a video storage device. In another implementation, the video storage device 102 can send the received and stored monitoring video to the server 103, and then the server 103 can receive and store the same.

In the procedure of processing the items included in the orders, the worker can acquire an item identifier and/or order identifier of the order to obtain the pieces of order information, which can be recorded in the server. At the same time, the monitoring device can monitor the procedure of processing the order by the worker to obtain the monitoring video, which can be stored in the video storage device. When receiving a complaint of abnormal quantity or status of item(s) from a user, a manager can query, according to an item identifier or order identifier provided by the user, an acquisition time point corresponding to the item identifier or the order identifier, and then manually search for a monitoring video corresponding to the acquisition time point, and manually cut out a duration of monitoring video comprising the acquisition time point as an evidence video and feed it back to the user.

In the following, a video query method provided by an embodiment of the present application is introduced. The video query method provided by the embodiment of the present application can be applied to the electronic device configured for querying a video in the logistics monitoring system, and the electronic device can be a server in the logistics monitoring system, which is referred to as the server hereinafter for the sake of clarity.

As shown in Fig. 2, a video query method includes:
S201, acquiring a to-be-queried identifier.
   Wherein the to-be-queried identifier is an item identifier or an order identifier.
S202, determining, from pre-recorded pieces of order information of orders, an acquisition time of first piece of order information corresponding to a target order as a processing start time.
   Wherein the target order is an order to which the to-be-queried identifier belongs, and the piece of order information includes a piece of information for an order corresponding to an item identifier belong to the order and/or a piece of information corresponding to an order identifier belong to the order.
S203, determining an acquisition time of a last piece of order information corresponding to the target order as a processing end time.
S204, acquiring a monitoring video corresponding to the target order based on the processing start time and the processing end time.

It can be seen that in the solution provided by the embodiment of the present application, the server can acquire the to-be-queried identifier, wherein the to-be-queried identifier is the item identifier or the order identifier; determine, from the pre-recorded pieces of order information of orders, an acquisition time of the first piece of order information corresponding to the target order as a processing start time, wherein the target order is an order to which the to-be-queried identifier belongs, and the piece of order information for an order includes the piece of information corresponding to the item identifier belong to the order and/or the piece of information corresponding to an order identifier belong to the order; determine an acquisition time of the last piece of order information corresponding to the target order as a processing end time; and then acquire a monitoring video corresponding to the target order based on the processing start time and the processing end time. Through the pre-recorded pieces of order information of the orders, the processing start time and the processing end time of the order to which the to-be-queried identifier belongs could be determined, so that the monitoring video corresponding to the order to which the to-be-queried identifier belongs could be acquired. The monitoring video corresponding to the target order that the user wants to query can be acquired without manually querying, viewing and cutting, which greatly improves the efficiency of video query.

An order is an ordering credential for a user to purchase an item. An order can include one or more items. An order identifier is used to distinguish different orders. The order identifier is a unique identifier of the corresponding order, which can specifically be an order number of the order. An item identifier is used to distinguish different items, and the item identifier is a unique identifier of the corresponding item, which can specifically be at least one of a barcode, a QR code, an item number, etc. The item identifier can be pasted or printed on an item, and can also be pasted or printed on an outer package of the item. No specific limitation is made here. A piece of order information refers to a piece of information generated during the procedure of processing the item included in the order which is related to the procedure of processing. For example, the piece of order information can be scanning code data obtained after scanning the item identifier or order identifier through the scanning device, and no specific limitation is made here.

When the user receives the item(s) of an order, if the item quantity is insufficient or the item is damaged or other cases occur, the user can complain about the order and provide the order identifier of the order or an item identifier of any item included in the order as the to-be-queried identifier.

In the above step S201, the server can acquire the to-be-queried identifier. The to-be-queried identifier can be the item identifier, for example, it can be a barcode of the item; or, the to-be-queried identifier can be the order identifier, for example, it can be an order number of the order, which is not specifically limited here.

Since the pieces of order information of the orders are pre-recorded in the server, the server can determine the order to which the to-be-queried identifier belongs, namely the target order, in the pre-recorded pieces of order information of the orders, and then determine the acquisition time of the first piece of order information corresponding to the target order as the processing start time, that is, execute the above step S202.

The to-be-queried identifier acquired by the server is an item identifier or an order identifier, and the server can acquire piece of order information corresponding to the to-be-queried identifier to determine the order to which the to-be-queried identifier belongs. As the target order, the piece of order information can include a piece of information corresponding to the item identifier belonging to the order and/or a piece of information corresponding to the order identifier.

In an implementation, the to-be-queried identifier is an order number, and the server can determine an order with the same order number as the order number as the target order. In another embodiment, the to-be-queried identifier is the barcode of the item, and the worker can acquire the piece of information corresponding to the barcode of the item. For example, a piece of scanning code information can be obtained by using the scanning device to scan the barcode of the item. The pre-recorded pieces of order information of the orders can include pieces of scanning code information corresponding to the barcodes of multiple items. Then the server can compare the piece of scanning code information with the pre-recorded pieces of scanning code information, and determine the order to which said piece of scanning code information belongs as the target order.

In the solution provided in the embodiment of the application, in the procedure of acquiring the piece of order information, a sequence of acquiring the pieces of information corresponding to the order identifier and to the item identifier(s) is not specifically limited, that is, in the procedure of acquiring the pieces of information corresponding to the order identifier and to the item identifier(s) included in each order, the piece of information corresponding to the order identifier can be acquired first, and then the pieces of information corresponding to the item identifiers can be acquired one by one; or, the pieces of information corresponding to the item identifiers can be acquired one by one, and then the piece of information corresponding to the order identifier can be acquired; or, the pieces of information corresponding to some of the item identifiers can be acquired first, then the piece of information corresponding to the order identifier can be acquired, and then the piece(s) of information corresponding to the remaining item identifier(s) can be acquired. Those are all reasonable, as long as the pieces of information corresponding to all of the order identifier and the item identifier(s) in each order is acquired.

The server can determine the acquisition time corresponding to the last piece of order information corresponding to the target order as the processing end time, that is, execute the above step S203.

The first piece of order information is, during the procedure of processing items included in an order, a obtained piece of order information acquired according to the identifier for the first time among obtained pieces of order information acquired according to all identifiers; the last piece of order information is, during the procedure of processing items included in an order, a obtained piece of order information acquired according to the identifier for the last time among the obtained pieces of order information acquired according to all identifiers. The processing start time is the acquisition time of the first piece of order information of the target order, and the processing end time is the acquisition time of the last piece of order information of the target order. During the time span from the processing start time to the processing end time, the monitoring video corresponding to the target order includes the video of the procedure of processing all the items included in the target order, which can be used as an evidence video to solve user complaints. Thus, in the above step S204, the server can acquire the monitoring video corresponding to the target order based on the processing start time and the processing end time.

In an implementation, the server can acquire the monitoring video pre-stored by the video storage device during the time span from the processing start time to the processing end time, and the monitoring video section is the monitoring video corresponding to the target order.

Using the solution provided in the embodiment of the application, the server can determine the target order to which the to-be-queried identifier belongs, and determine the processing start time and processing end time of the target order, and then acquire the monitoring video corresponding to the target order based on the processing start time and processing end time. Without manually querying, viewing and cutting, the monitoring video corresponding to the target order that the user wants to query can be quickly acquired, which greatly improves the efficiency of video query. It is convenient to solve user's transaction disputes and reduce complaints from the user.

As an implementation of the embodiment in the application, the first piece of order information mentioned above can be a piece of order information next to a piece of end identification information with a latest acquisition time prior to an acquisition time of the piece of information corresponding to the to-be-queried identifier, and the first piece of order information has an acquisition time later than the acquisition time of said piece of end identification information. Alternatively, the first piece of order information mentioned above can be a piece of order information with a later acquisition time in target adjacent pieces of order information with a latest acquisition time prior to an acquisition time of the piece of information corresponding to the to-be-queried identifier.

In an implementation, in order to improve the efficiency of video query, an end code can be preset without changing the hardware equipment of the existing logistics monitoring system. The end code can be used to indicate the completion of processing all the items included in the order. For example, the end code can be a barcode or a QR code, and no specific limitation is made here. After the completion of acquiring all the item identifiers and order identifier included in an order, the worker can acquire the end code and get the piece of end identification information, wherein the piece of end identification information can indicate the completion of acquiring the pieces of order information of any order, so that the server can acquire and record piece of the end identification information.

The item included in the order may be processed at a processing table, which may be a packaging or unloading table or other processing table that handles the item in other ways. Taking the processing table being the packaging table as an example to illustrate, in the procedure of packaging the item included in an order, the processing table can include a packaging table for packaging the item included in the order, and the end code can be set on the packaging table, for example, it can be pasted on the packaging table. In the case of multiple packaging tables, in order to facilitate the query of monitoring video, packaging tables can be associated with different upload channels of the NVR in advance. After the NVR uploads the acquired pieces of order information to the server, the server can determine the packaging table identifier of the packaging table associated with each upload channel. The server can store the pieces of order information and the end piece of identification information, and a corresponding packaging table identifier in an associated way.

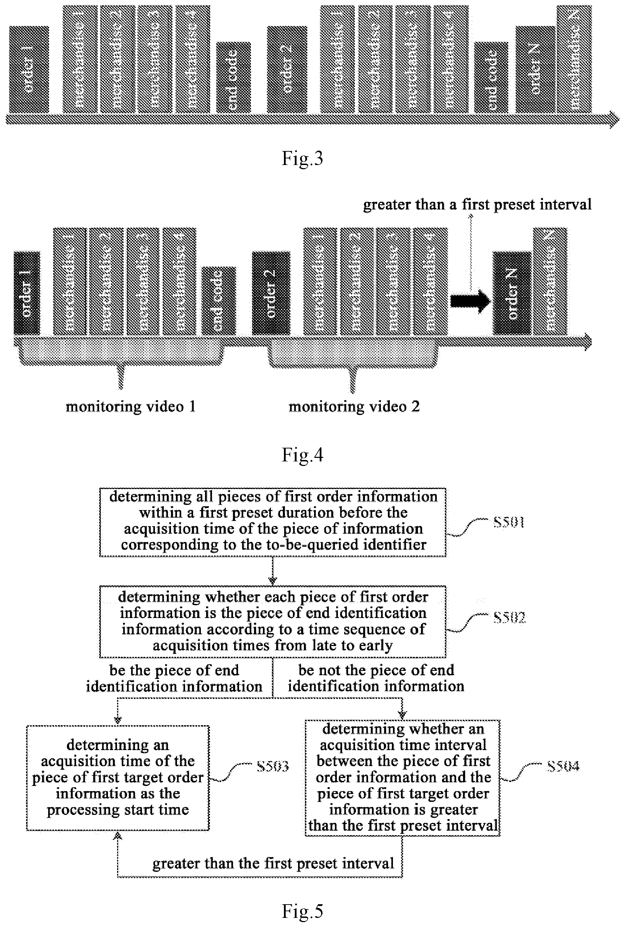

For one packaging table, the schematic diagram of the pieces of order information corresponding to the packaging table recorded by the server can be shown in Fig. 3, wherein order 1, order 2 and order N represent pieces of information corresponding to the order identifiers of the respective orders, and merchandise 1, merchandise 2, merchandise 3, merchandise 4 and merchandise N represent pieces of information corresponding to the respective item identifiers in a corresponding order, and the end code represents a piece of end identification information of a corresponding order.

Then, before the acquisition time of the piece of information corresponding to the to-be-queried identifier, a piece of end identification information with a latest acquisition time is the piece of end identification information of the previous order of the target order, and the next piece of order information to said piece of end identification information of the previous order of the target order is the first one piece of order information of the target order, namely the first piece of order information.

For example, if the to-be-queried identifier is the item identifier of the second item included in order 2 in Fig. 3, the corresponding piece of order information is merchandise 2 included in order 2 in Fig. 3, then before the acquisition time of merchandise 2 included in order 2, the piece of end identification information with the latest acquisition time is the end code corresponding to order 1, and then, it can be determined that the next piece of order information to the end code is the first piece of order information of the target order, that is, order 2 in Fig. 3.

However, in some cases, the worker may forget to acquire the piece of end identification information after completing to acquire the pieces of information corresponding to item identifiers and an order identifier included in an order, so that the server fails to record the piece of end identification information of the order. For accurately determining the first piece of order information in this case, in an implementation, after processing the item included in one order and completing to acquire the pieces of information corresponding to the item identifiers and the order identifier included in the order, the worker generally needs to wait for a duration of time before continuing to process an item included in a next order.

For example, the worker may pack the items included in the order, deliver them to the storage location, and then go to the warehouse to pick up the items included in the next order. Or the worker may first transfer all the items included in the order, and then, after the transfer processing is completed, further transfer the items included in the next order. This procedure takes a long time. Since the interval between acquisition times of the pieces of information corresponding to two item identifiers in the same order, or an item identifier and an order identifier is short, the first preset interval can be preset. The first preset interval can be set according to the time interval between the completion of processing the items included in one order and the beginning of processing the items included in the next order by the worker, for example, it can be 5 minutes, 15 minutes, 20 minutes, etc., and there is no specific limitation.

Then, before the acquisition time of the piece of information corresponding to the to-be-queried identifier, the piece of order information with a later acquisition time in the target adjacent pieces of order information with the latest acquisition times is the first piece of order information of the target order, wherein the target adjacent pieces of order information are two adjacent pieces of order information with an acquisition time interval greater than the first preset interval. In the target adjacent pieces of order information, since the acquisition time interval of the two is greater than the first preset interval, it means that the two belong to different orders respectively. The piece of order information with an earlier acquisition time is the last piece of order information of the previous order, and the piece of order information with a later acquisition time is the first piece of order information of the target order.

For example, refer to the pieces of order information shown in Fig. 4, wherein order 1, order 2 and order N represent the pieces of information corresponding to the order identifiers of the respective orders, merchandise 1, merchandise 2, merchandise 3, merchandise 4 and merchandise N represent the pieces of information corresponding to the respective item identifiers in a corresponding order, and the end code represents the piece of end identification information of the end identification of a corresponding order. It can be seen that after the completion of acquiring the pieces of information corresponding to the order identifier and item identifiers of an order corresponding to order 2, the worker did not acquire the piece of end identification information, and the time interval between the acquisition times of merchandise 4 and of order N is greater than the first preset interval. Then, if the user wants to view the monitoring video corresponding to order 1, a monitoring video is monitoring video 1 including order 1-end code, and if the user wants to view the monitoring video corresponding to order 2, a monitoring video is monitoring video 2 including order 2-merchandise 4.

Assume that a to-be-queried identifier is the item identifier of merchandise N included in order N, then the target adjacent pieces of order information acquired nearest before the acquisition time of the to-be-queried identifier is merchandise 4 of order 2 and order N, and the one with a later acquisition time is order N, which is the first piece of order information of the target order.

Accordingly, in an implementation, the last piece of order information mentioned above may be a piece of end identification information with an earliest acquisition time after an acquisition time of the piece of information corresponding to the to-be-queried identifier; or, the last piece of order information mentioned above may be a piece of order information with an earlier acquisition time in target adjacent pieces of order information with an earliest acquisition time after an acquisition time of the piece of information corresponding to the to-be-queried identifier.

Similarly, after the acquisition time of the piece of information corresponding to the to-be-queried identifier, the piece of end identification information with the earliest acquisition time is the piece of end identification information of the target order, which is also the last piece of order information of the target order. If the worker forgets to acquire the piece of end identification information, the target adjacent pieces of order information with the earliest acquisition time relative to and after the acquisition time of the piece of information corresponding to the to-be-queried identifier is the last one piece of order information of the target order and the first one piece of order information of the next order. Therefore, in the target adjacent pieces of order information, the piece of order information with an earlier acquisition time is the last piece of order information of the target order.

In an implementation, the server can determine the piece of order information next to an nearest piece of end identification information with a latest acquisition time prior to an acquisition time of the piece of information corresponding to the to-be-queried identifier, and the first piece of order information has an acquisition time later than the acquisition time of said piece of end identification information, and determine the piece of order information with a later acquisition time in target adjacent pieces of order information with latest acquisition times prior an acquisition time of the piece of information corresponding to the to-be-queried identifier; then compare the acquisition time corresponding to the piece of order information next to the nearest piece of end identification information with the acquisition time corresponding to the piece of order information with the later acquisition time, and determine the piece of order information with a more later acquisition time as the first piece of order information of the target order.

Accordingly, the server can determine a piece of end identification information with an earliest acquisition time after an acquisition time of the piece of information corresponding to the to-be-queried identifier; and determine a piece of order information with an earlier acquisition time in target adjacent pieces of order information with an earliest acquisition time after an acquisition time of the piece of information corresponding to the to-be-queried identifier; then compare the acquisition time corresponding to the piece of end identification information with the acquisition time corresponding to the piece of order information with the earlier acquisition time, and determine the piece of order information with a more earlier acquisition time as the last piece of order information of the target order.

In this embodiment, the first piece of order information and the last piece of order information of the target order can be accurately determined by acquiring the piece of end identification information or presetting the first preset interval, and then the processing start time and the processing end time of the target order can be accurately determined, which improves the accuracy of video query.

As an implementation of the embodiment of the present application, as shown in Fig. 5, the step of determining, from the pre-recorded pieces of order information of the orders, the acquisition time of the first piece of order information included in the target order as the processing start time can include:
S501, determining all pieces of first order information within a first preset duration before the acquisition time of the piece of information corresponding to the to-be-queried identifier.

Since the first piece of order information may be a piece of order information obtained before the acquisition time of the piece of information corresponding to the to-be-queried identifier, the first preset duration can be set in advance in order to determine the accurate first piece of order information of the target order and reduce the amount of calculation as much as possible. The first preset duration can be set according to the frequency of processing the items included in the orders and other factors, as long as it is ensured that the pieces of order information within the first preset duration before the acquisition time of the piece of information corresponding to the to-be-queried identifier can include the first piece of order information of the target order and some pieces of the order information of its previous order, for example, the first preset duration can be 1 hour, 6 hours, 1 day, etc., and no specific limitation is made here.

In this way, the server can determine all pieces of the first order information within the first preset duration before the acquisition time of the piece of information corresponding to the to-be-queried identifier, and of course, it can also include the piece of information corresponding to the to-be-queried identifier.

S502, determining whether each piece of first order information is the piece of end identification information according to a time sequence of acquisition times from late to early; if the piece of first order information is the piece of end identification information, executing step S503; if the piece of first order information is not the piece of end identification information, executing step S504.

After determining all pieces of the first order information within the first preset duration before the acquisition time of the piece of information corresponding to the to-be-queried identifier, a piece of end identification information with the latest acquisition time before the acquisition time corresponding to the to-be-queried identifier is the piece of end identification information of the previous order of the target order, so in order to quickly and accurately determine the first piece of order information of the target order, the server can determine whether each piece of first order information is the piece of end identification information one by one according to the time sequence of acquisition times from late to early.

S503, determining an acquisition time of the piece of first target order information as the processing start time.

Wherein the piece of first target order information is a piece of order information with an earliest acquisition time in pieces of order information with the acquisition times later than that of the piece of first order information.

If the piece of first order information is the piece of end identification information, it means that the piece of first order information is the piece of end identification information of the previous order to the target order, then the piece of first target order information, namely the piece of order information with an earliest acquisition time in pieces of order information with the acquisition times later than that of the piece of first order information, is the first piece of order information of the target order, and then, the server can determine the acquisition time of this piece of first target order information as the processing start time.

S504, determining whether an acquisition time interval between the piece of first order information and the piece of first target order information is greater than the first preset interval; if the acquisition time interval is greater than the first preset interval, executing the step S503; if the acquisition time interval is not greater than the first preset interval, continuing to determine whether a next piece of first order information is the piece of end identification information.

If the piece of first order information is not the piece of end identification information, in order to avoid that the piece of first order information being not the piece of end identification information is caused by the worker who forgot to acquire the piece of end identification information, the server can judge whether the acquisition time interval between the piece of first order information and the piece of first target order information is greater than the first preset interval.

If the acquisition time interval is greater than the first preset interval, it means that the piece of first order information is the last piece of order information of the previous order of the target order, and the piece of first target order information is the first piece of order information of the target order. If the acquisition time interval is not greater than the first preset interval, it means that the piece of first target order information is a piece of information corresponding to another item identifier or order identifier included in the target order, so the acquisition time of the piece of first target order information is not the processing start time, and the server can continue to determine whether the next piece of first order information is the piece of end identification information according to the time sequence of the acquisition times from late to early.

If the acquisition time interval is greater than the first preset interval, it means that the worker forgot to acquire the piece of end identification information of the previous order of the target order, it can be determined that the piece of first target order information is the first piece of order information of the target order, and the server can determine the acquisition time of the piece of first target order information as the processing start time.

In this embodiment, the server can acquire all pieces of first order information within the first preset duration before the acquisition time of the piece of information corresponding to the to-be-queried identifier, determine whether each piece of first order information is the piece of end identification information according to the order of acquisition time from late to early, and determine whether the acquisition time interval between the piece of first order information and the piece of first target order information is greater than the first preset interval. Then, the first piece of order information of the target order is determined from all pieces of first order information, and the processing start time is determined. In this way, the processing start time of the target order can be determined quickly and accurately regardless of the worker acquires the piece of end identification information or forgets to acquire the piece of end identification information.

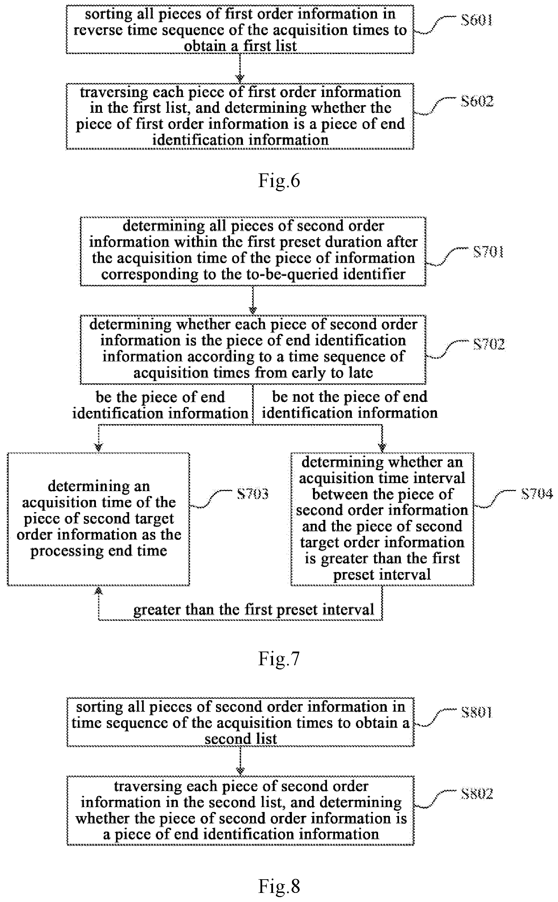

As an implementation of the embodiment of the present application, as shown in Fig. 6, the above step of determining whether each piece of first order information is the piece of end identification information according to an order of the acquisition time from late to early can include:
S601, sorting all pieces of first order information in reverse time sequence of the acquisition times to obtain a first list.

In order to conveniently determine whether each piece of first order information is the piece of end identification information according to the time sequence from late to early, the server can sort all pieces of first order information in reverse time sequence of the acquisition times to obtain the first list. In this way, the pieces of first order information in the first list are sorted in time sequence of acquisition times from late to early, which is convenient to be traversed one by one.

S602, traversing each piece of first order information in the first list, and determining whether the piece of first order information is a piece of end identification information.

After the first list is obtained, the server can traverse each piece of first order information in the first list, and every time one piece of first order information is traversed, determine whether the piece of first order information is the end identification information.

In this embodiment, the server can obtain the first list by sorting all pieces of the first order information in reverse time sequence of the acquisition times, and traverse each piece of first order information in the first list to determine whether the piece of first order information is the piece of end identification information. By traversing each piece of first order information in the first list, it can quickly determine whether each piece of first order information is the piece of end identification information, and then quickly determine the processing start time of the target order.

As an implementation of the embodiment of the present application, as shown in Fig. 7, the step of determining the acquisition time corresponding to the last piece of order information included in the target order as the processing end time can include: S701, determining all pieces of second order information within the first preset duration after the acquisition time of the piece of information corresponding to the to-be-queried identifier.

Since the last piece of order information may be the piece of order information obtained after the acquisition time of the piece of information corresponding to the to-be-queried identifier, in order to accurately determine the last piece of order information of the target order and reduce the amount of calculation as much as possible at the same time, the first preset duration can be set in advance. The first preset duration can ensure that the pieces of order information within the first preset duration after the acquisition time of the piece of information corresponding to the to-be-queried identifier can include the last piece of order information of the target order and some pieces of the order information of its next order.

In this way, the server can determine all pieces of the second order information within the first preset duration after the acquisition time of the piece of information corresponding to the to-be-queried identifier, which of course can also include the piece of order information corresponding to the to-be-queried identifier.

S702, determining whether each piece of second order information is the piece of end identification information according to a time sequence of acquisition times from early to late; if the piece of second order information is the piece of end identification information, executing step S703; if the piece of second order information is not the piece of end identification information, executing step S704.

After determining all pieces of second order information within the first preset duration after the acquisition time of the piece of information corresponding to the to-be-queried identifier, the piece of end identification information with the earliest acquisition time after the acquisition time corresponding to the to-be-queried identifier is the piece of end identification information of the target order, so in order to quickly and accurately determine the last piece of order information of the target order, the server can determine whether each piece of second order information is the piece of end identification information one by one according to a time sequence of acquisition times from early to late.

S703, determining an acquisition time of the piece of second target order information as the processing end time.

If the piece of second order information is the piece of end identification information, it means that the piece of second order information is piece of the end identification information of the target order, that is, the last piece of order information of the target order. Furthermore, the server can determine the acquisition time corresponding to the piece of second order information as the processing end time.

S704, determining whether an acquisition time interval between the piece of second order information and the piece of second target order information is greater than the first preset interval. If the acquisition time interval is greater than the first preset interval, executing the step S703; if the acquisition time interval is not greater than the first preset interval, continuing to determine whether the next piece of second order information is the piece of end identification information.

Wherein the piece of second target order information is a piece of order information with a latest acquisition time among the pieces of order information with the acquisition times earlier than that of the piece of second order information.

If the piece of second order information is not the piece of end identification information, in order to avoid that the piece of second order information being not the piece of end identification information is caused by the worker who forgot to acquire the piece of end identification information, the server can judge whether the acquisition time interval between the piece of second order information and the piece of second target order information is greater than the first preset interval.

If the acquisition time interval is greater than the first preset interval, it means that the piece of second order information is the first piece of order information of the next order of the target order, and the piece of second target order information is the last piece of order information of the target order. If the acquisition time interval is not greater than the first preset interval, it means that the piece of second target order information is a piece of order information corresponding to another item identifier or order identifier included in the target order, so the acquisition time of the piece of second target order information is not the processing end time, and the server can continue to determine whether the next piece of second order information is the piece of end identification information according to a time sequence of the acquisition times from early to late.

If the acquisition time interval is greater than the first preset interval, it means that the worker forgot to acquire the piece of end identification information of the target order, it can be determined that the piece of second target order information is the last piece of order information of the target order, and the server can determine the acquisition time of the piece of second target order information as the processing end time.

In this embodiment, the server can acquire all pieces of second order information within the first preset duration after the acquisition time of the piece of information corresponding to the to-be-queried identifier, determine whether each piece of second order information is the piece of end identification information according to the time sequence of acquisition times from early to late, and determine whether the acquisition time interval between the piece of second order information and the piece of second target order information is greater than the first preset interval, and Then determine the last piece of order information of the target order from all pieces of the second order information, and determine the processing end time. In this way, the processing end time of the target order can be determined quickly and accurately regardless of the worker acquiring the piece of end identification information or forgetting to acquire the piece of end identification information.

As an implementation of the embodiment of the present application, as shown in Fig. 8, the step of determining whether each piece of second order information is the piece of end identification information according to the time sequence of the acquisition times from early to late may include:
S801: sorting all pieces of second order information in time sequence of the acquisition times to obtain a second list.
   In order to conveniently determine whether each piece of first order information is the pieces of end identification information in time sequence from late to early, the server can sort all pieces of second order information in time sequence of the acquisition times to obtain the second list. In this way, the pieces of second order information in the second list are sorted in time sequence of acquisition times from early to late, which is convenient to be traversed one by one.
S802: traversing each piece of second order information in the second list, and determining whether the piece of second order information is a piece of end identification information.

After the second list is obtained, the server can traverse each piece of second order information in the second list, and every time a piece of second order information is traversed, determine whether the piece of second order information is the piece of end identification information.

In this embodiment, the server can obtain the second list by sorting all pieces of second order information in time sequence of the acquisition times, and traverse each piece of second order information in the second list to determine whether the piece of second order information is the piece of end identification information. By traversing each piece of second order information in the second list, it can quickly determine whether each piece of second order information is the piece of end identification information, and then quickly determine the processing end time of the target order.

As an implementation of the embodiment of the present application, the above pre-recorded piece of order information of the order may be the piece of scanning code information of the item identifier and/or the piece of scanning code information of the order identifier acquired during the procedure of processing an item included in the order, and the acquisition time of the above piece of order information may be the scanning time of the corresponding piece of scanning code information. The above piece of end identification information can be the piece of scanning code information of the end code set on the processing table for processing the item.

During the procedure of processing the item included in the order, the worker can acquire the order identifier of the order and the item identifier of the item included in the order. For example, the scanning device can scan the item identifier to obtain the piece of scanning code information of the item identifier. The scanning device can also scan the order identifier to obtain the piece of scanning code information of the order identifier.

The end code can be set on the processing table for processing item. After the completion of scanning the order identifier of the order and the item identifier of the item included in the order, the worker can scan the end code by the scanning device to obtain the piece of end identification information, indicating the completion of acquiring the pieces of order information of the order. Then the scanning device can upload the pieces of scanning code information of the item identifier and the piece of scanning code information of the order identifier as the pieces of order information of the order to the server, and upload the piece of end identification information to the server. The server can record the pieces of order information of the order, and take the scanning times of the pieces of scanning code information as the acquisition times of the respective pieces of order information, and take the scanning time of the end code as the acquisition time of the piece of end identification information.

In an implementation, the scanning device may include a scanning gun and a converter. The scanning gun is used to scan an item identifier, an order identifier and an end code, and the converter can send the pieces of scanning code information obtained by the scanning gun scanning the item identifier, order identifier, and the piece of end code information obtained by the scanning gun scanning the end code to the server.

**In** this embodiment, the server can acquire and store the piece of scanning code information of the item identifier and the piece of scanning code information of the order identifier as the pre-recorded pieces of order information of the order, and the piece of scanning code information of the end code as the piece of end identification information during the procedure of processing the item included in the order. The acquisition time of a piece of order information can be the scanning time of its corresponding piece of scanning code information, and the acquisition time of the piece of end identification information can be the scanning time of the end code. Thus, the pieces of order information, the piece of end identification information, the acquisition times of the pieces of order information, and the acquisition time of the piece of end identification information can be accurately recorded, which facilitates the video query.

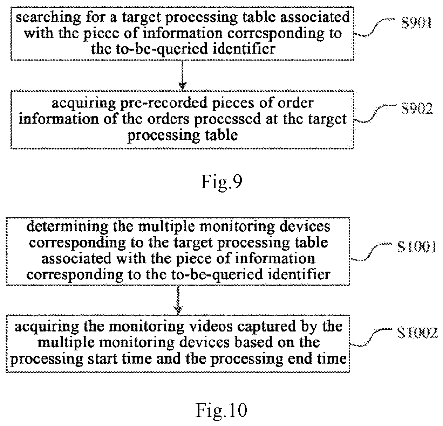

As an implementation of the embodiment of the present application, as shown in Fig. 9, the item included in the above order can be processed on the processing table, and the above piece of order information can be associated with the processing table that processes the order, prior to the above step of determining, from the pre-recorded pieces of order information of the orders, the acquisition time of the first piece of order information included in the target order, the above method can further include:
S901, searching for a target processing table associated with the piece of information corresponding to the to-be-queried identifier.

The item included in the order is processed at the processing table, the piece of order information is associated with the processing table that processes the order, but there may be multiple processing tables and the processing table may be associated with multiple monitoring devices, that is, there may be a large number of monitoring videos, and the monitoring video required by video query is the video captured by the monitoring device associated with the target processing table that processes the item included in the order. So in order to accurately and quickly determine the monitoring video that the user wants to search for, the server can search for the target processing table associated with the piece of information corresponding to the to-be-queried identifier after the query identifier is acquired. In an implementation, when recording the pieces of order information of each order, the server can record the same in a corresponding way to the identifier of the associated target processing table. In this way, after acquiring the to-be-queried identifier, the server can determine the identifier of the target processing table used to process the item included in the order according to the piece of information corresponding to the to-be-queried identifier. The target processing table corresponding to the identifier of the target processing table is the target processing table associated with the piece of information corresponding to the to-be-queried identifier.

S902, acquiring pre-recorded pieces of order information of the orders processed at the target processing table.

All the pieces of order information of the target order are the pieces of information corresponding to the order identifier and item identifier of the order processed at the processing table, and the pieces of order information are associated with the processing table that processes the order, so the server can acquire the pre-recorded pieces of order information of the order processed at the target processing table, and then determine the first piece of order information and the last piece of order information included in the target order.

For example, if the identifier of the target processing table associated with the piece of information corresponding to the to-be-queried identifier is packaging table A, then the server can acquire the pre-recorded pieces of order information of all orders packaged at the packaging table identified as packaging table A.

In this embodiment, the item included in the order can be processed at the processing table, the pieces of order information can be associated with the processing table that processes the order, and the server can search for the target processing table associated with the piece of information corresponding to the to-be-queried identifier and acquire the pre-recorded pieces of order information of the orders processed at the target processing table. In this way, when there are multiple processing tables, the target processing table processing the item included in the target order can be determined, and the pre-recorded pieces of order information of the orders processed at the target processing table can be acquired, which effectively reduces the amount of order information to be processed and further improves the efficiency of video query.

As an implementation of the embodiment of the present application, as shown in Fig. 10, the item included in the order can be processed at a processing table, and the processing table can be associated with multiple monitoring devices, the above step of acquiring the monitoring video corresponding to the target order based on the processing start time and the processing end time can include:
S1001, determining the multiple monitoring devices corresponding to the target processing table associated with the piece of information corresponding to the to-be-queried identifier.
   In order to further improve the efficiency of video query, the server can determine the target processing table associated with the piece of information corresponding to the to-be-queried identifier. Since the target processing table can be associated with multiple monitoring devices, the server can also determine the multiple monitoring devices corresponding to the target processing table.
S1002, acquiring the monitoring videos captured by the multiple monitoring devices based on the processing start time and the processing end time.

The server can acquire the monitoring videos captured by multiple monitoring devices based on the processing start time and the processing end time. For example, the item included in the order is processed at the processing table, which includes a video storage device for storing the videos captured by the associated multiple monitoring devices. The server can acquire the monitoring videos captured by multiple monitoring devices stored in advance by the video storage device during the time span from the processing start time to the processing end time, and the monitoring videos are the monitoring videos corresponding to the target order.

In this embodiment, the server can determine multiple monitoring devices corresponding to the target processing table associated with the piece of information corresponding to the to-be-queried identifier, and acquire the monitoring videos captured by multiple monitoring devices based on the processing start time and processing end time, which reduces the time of acquiring monitoring videos and further improves the efficiency of video query.

As an implementation of the embodiment of the present application, the above method further includes:
playing the monitoring videos by applying a multi-playing windows playing mode, or, sending the monitoring videos to a playing device to cause the playing device to play the monitoring videos in a multi-playing windows playing mode.

Wherein each playing window is configured to play the video captured by a corresponding monitoring device.

The monitoring videos acquired by the server can be monitoring videos captured by multiple monitoring devices corresponding to the target processing table, and the shooting angles and contents of the videos may be different. In order to quickly view whether there is an abnormal situation in the procedure of processing the item included in the target order, the server can play the captured multiple monitoring videos by applying a multi-playing windows playing mode, or, sent the monitoring videos to a playing device so that the playing device can play the monitoring videos in a multi-playing windows playing mode, and each playing window can be used to play the video captured by a corresponding monitoring device.

In an implementation, each playing window can also have an independent playing progress bar, so that multiple monitoring videos with different shooting angles and different shooting times can be played at the same time by adjusting the playing progress of the monitoring videos played in respective playing windows separately.

In this embodiment, the server can play the monitoring videos in the multi-playing windows playing mode, or it can send the monitoring videos to the playing device so that the playing device can play the monitoring videos in the multi-playing windows playing mode, wherein each playing window can play the video captured by the corresponding monitoring device. Thus, it is convenient to confirm whether there is any abnormality in the procedure of processing the item(s) included in the target order from multiple perspectives, and it is conducive to quickly solve the complaint of the user.

As an implementation of the embodiment of the present application, the item included in the order can be processed at a processing table, which may include a packaging table for packaging the item included in the order.

Due to the high possibility of loss or damage of items in the procedure of packaging items, the worker can scan the order identifier of the order and the item identifiers of the items included in the order one by one in the procedure of packaging processing of the items included in the order, and scan the end code set on the packaging table after the completion of scanning the order identifier and the item identifiers of the items. Thus, the pieces of order information and end identification information of the order and the corresponding acquisition times thereto are obtained. By determining the acquisition times of the first piece of order information and the last piece of order information of the order, the monitoring video of the packaging procedure of the item included in the order can be acquired.

In this embodiment, the processing table can include a packaging table for packaging the item included in the order, by querying the monitoring video of the packaging procedure, it can judge whether there is an abnormality in the packaging procedure of the item included in the order, which is convenient for quickly solving the user's transaction disputes, and can greatly reduce the number of user complaints.

As an implementation of the embodiment of the present application, the above step of acquiring the monitoring video corresponding to the target order based on the processing start time and the processing end time can include:
acquiring a monitoring video from a video recording start time to a video recording end time from a pre-stored monitoring video.

Wherein the video recording start time is obtained by subtracting a first threshold from the processing start time, and/or, the video recording end time is obtained by adding a second threshold to the processing end time.

The procedure of processing the items included in the target order begins at the processing start time and ends at the processing end time. However, due to the cause of the problem of the items may also be related to what happened before the processing of the items included in the target order starts and/or after the processing of the items included in the target order ends, the monitoring video corresponding to the target order can include a duration of the monitoring video before the procedure of processing the item included in the target order starts, and/or after the procedure of processing the item included in the target order ends.

In order to facilitate the user to view the monitoring video in the duration preceding and/or following the procedure of processing the item included in the target order, the server can set the video recording start time by subtracting a first threshold from the processing start time, and/or, set the video recording end time by adding a second threshold to the processing end time.

The first threshold and the second threshold can be set based on the actual application requirements of video query, and they can be the same or different, which are both reasonable. For example, it could be 30 seconds, 1 minute, 5 minutes, and so on, and is not specifically limited here. The server can acquire, from the monitoring videos pre-stored by the video storage device, a monitoring video from the video recording start time to the video recording end time, which, compared with the monitoring video from the processing start time to the processing end time, extends the time of the monitoring video corresponding to the target order, which is convenient for user to view.

In this embodiment, the server can acquire, from the pre-stored monitoring video, the monitoring video from the video recording start time to the video recording end time, so as to facilitate the user to quickly view the monitoring video in the duration preceding and/or following the procedure of processing the item included in the target order, which is more conducive to quickly solve the complaints of users.

As an implementation of the embodiment of the present application, the above method may further include:
playing the monitoring video starting from the processing start time and displaying a playing progress bar, playing, when the playing progress adjustment instruction for the playing progress bar is acquired, the monitoring video at the time corresponding to a playing progress bar after the playing progress adjustment instruction is executed, wherein a duration corresponding to the playing progress bar is from the video recording start time to the video recording end time, after the playing progress adjustment instruction is executed, the time corresponding to the playing progress bar is located between the video recording start time and the video recording end time; or,
controlling the playing device to play the monitoring video starting from the processing start time and displaying a playing progress bar, so that when the playing device acquires the playing progress adjustment instruction for the playing progress bar, the playing device plays a monitoring video at the time corresponding to the playing progress bar after the playing progress adjustment instruction is executed.

The server can have a display device such as a LCD screen, so that it can play the acquired monitoring video; the server can also control other playing devices to play the acquired monitoring video, to meet the requirements of different users for playing the monitoring video and viewing whether there is any abnormality in the procedure of processing item.

After the server determines the monitoring video corresponding to the target order, it can play the monitoring video for viewing. Generally, only the monitoring video in the duration from the processing start time to the processing end time needs to be viewed, thus the monitoring video can played from the processing start time.

In order to facilitate the user to select the playing progress of the monitoring video, a playing progress bar can be displayed. In an implementation, the time corresponding to the playing progress bar may be between the video recording start time and the video recording end time. In this way, if the user wants to view the monitoring video in the duration before the start of procedure of processing the item included in the target order and/or after the end of procedure of processing the item included in the target order, he/she can issue a playing progress adjustment instruction to achieve this. When the server acquires the playing progress adjustment instruction for the playing progress bar, it can play the monitoring video of the duration corresponding to the playing progress bar after executing the playing progress adjustment instruction, so that the user can watch the monitoring video corresponding to any time point of interest on the playing progress bar.

In an implementation, if there are multiple monitoring devices that collect monitoring videos associated with the target processing table that processes the item included in the target order, the server can acquire the monitoring videos captured by the multiple monitoring devices. Thus, when playing the monitoring videos, the corresponding number of playing windows can be displayed, and each playing window plays the monitoring video captured by the corresponding monitoring device. In this way, user can watch the monitoring videos captured from multiple perspectives and find out the problem more quickly and easily. The way of playing the monitoring video in each playing window can be to play the captured monitoring video starting from the processing start time, and display the playing progress bar, which will not be repeated here.

In the procedure of playing a monitoring video, the user can issue a playing progress adjustment instruction to select the part of the monitoring video he/she is interested in. When the playing progress adjustment instruction is acquired, the playing device can determine the time corresponding to the playing progress bar after the playing progress adjustment instruction is executed, and start playing the monitoring video from this time. The time corresponding to the playing progress bar after the playing progress adjustment instruction is executed can be any time point between the video recording start time and the video recording end time, in this way, if the user wants to view the duration of the monitoring video before the start of procedure of processing the item included in the target order, and/or after the end of procedure of processing the item included in the target order, he/she can issue the playing progress adjustment instruction to make the playing progress bar move to a corresponding position.

In this embodiment, the server can start playing the monitoring video from the processing start time or control the playing device to start playing the monitoring video from the processing start time, and display the playing progress bar. When the playing progress adjustment instruction for the playing progress bar is acquired, the monitoring video can be played at the time corresponding to the playing progress bar after the playing progress adjustment instruction is executed. The user can issue an playing progress adjustment instruction to move the playing progress bar to any position between the video recording start time and the video recording end time, and watch the monitoring video at the corresponding time, so that not only the monitoring video from the processing start time to the processing end time of the target order can be viewed, but also the duration of the monitoring video before the start of the procedure of processing the item included in the target order, and/or, after the end of procedure of processing the item included in the target order can be viewed, so that whether there is an abnormality in the target order can be quickly determined.

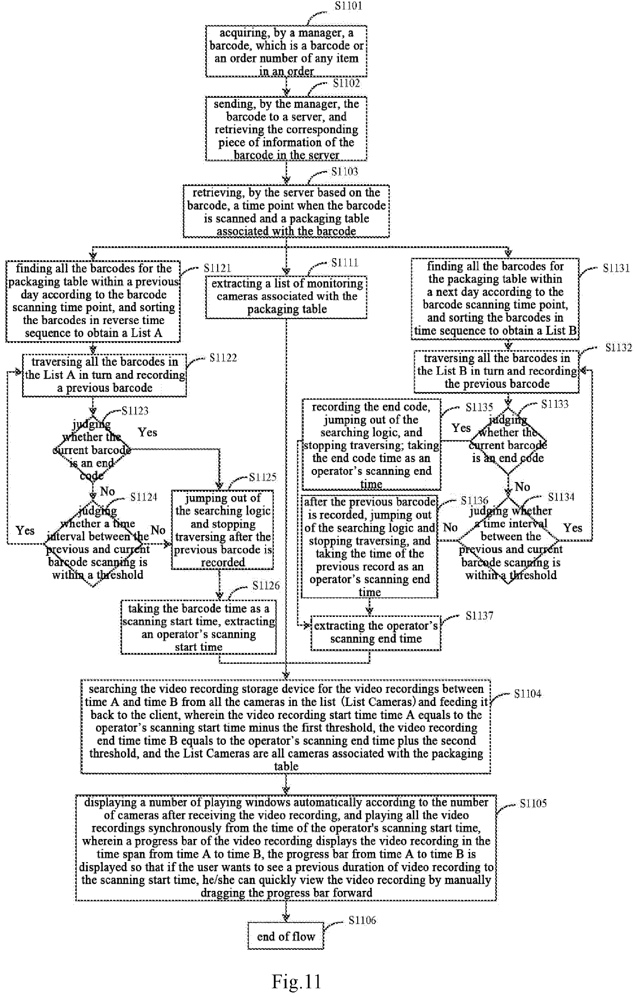

In the following, combined with the flowchart diagram of querying a video shown in Fig. 11, the specific flow of querying the monitoring video of the packaging procedure of the item included in the target order based on the to-be-queried identifier is introduced.
S1101, acquiring, by a manager, a barcode, which is a barcode or an order number of any item in an order;
   wherein the barcode is a to-be-queried identifier uploaded by a user, and the manager can acquire the to-be-queried identifier uploaded by the user, that is, an item identifier of an item included in an order or an order identifier of the order.
S1102, sending, by the manager, the barcode to a server, and retrieving the corresponding piece of information of the barcode in the server;
   that is, the manager can send the to-be-queried identifier to the server, and determine the piece of information corresponding to the to-be-queried identifier from the pre-recorded pieces of order information of orders in the server.
S1103, retrieving, by the server based on the barcode, a time point when the barcode is scanned and a packaging table associated with the barcode;
   that is, the server can acquire the acquisition times of the piece of information corresponding to the to-be-queried identifier, and the target processing table to process the item included in the order to which the to-be-queried identifier belongs.

And then, the server can start executing the following flow:
Flow One: S1111, extracting a list of monitoring cameras associated with the packaging table;
that is, the multiple monitoring devices corresponding to the target processing table are determined.

Flow Two: S1121, finding all the barcodes for the packaging table within a previous day according to the barcode scanning time point, and sorting the barcodes in reverse time sequence to obtain a List A;
that is, the pieces of first order information of the orders processed in the target processing table within the first preset duration before the acquisition time of the pre-recorded piece of information corresponding to the to-be-queried identifier is acquired, wherein the first preset duration is 24 hours, and sorting in reverse time sequence is sorting in time sequence from late to early according to acquisition times;
S1122, traversing all the barcodes in the List A in turn and recording a previous barcode;
S1123, judging whether the current barcode is an end code; if the current barcode is not the end code, performing step S1124, if the current barcode is the end code, performing step S1125;
that is, according to the time sequence of the acquisition times from late to early, whether each piece of first order information is the piece of end identification information is determined;
S1124, judging whether a time interval between the previous and current barcode scanning is within a threshold; if it is within the threshold, returning back to perform step S1122, if it is not within the threshold, performing step S1125;
S1125, jumping out of the searching logic and stopping traversing after the previous barcode is recorded.
S1126, taking the barcode time as a scanning start time, extracting an operator's scanning start time;
   that is, if the piece of first order information is the piece of end identification information, determining the acquisition time of the piece of first target order information as the processing start time; if the piece of first order information is not the piece of end identification information, determining whether the acquisition time interval between the piece of first order information and the piece of first target order information is greater than a first preset interval, wherein the piece of first target order information is the piece of order information with the earliest acquisition time in the pieces of order information with acquisition times later than that of the piece of first order information; if the acquisition time interval is greater than the first preset interval, determining the acquisition time of the piece of first target order information as the processing start time.
Flow Three: S1131, finding all the barcodes for the packaging table within a next day according to the barcode scanning time point, and sorting the barcodes in time sequence to obtain a List B;
that is, within the first preset duration after the acquisition time of the pre-recorded piece of information corresponding to the to-be-queried identifier, the pieces of second order information of the orders processed at the target processing table is acquired, wherein the first preset duration is 24 hours, and sorting in time sequence is sorting in sequence of acquisition times from early to late.
S1132, traversing all the barcodes in the List B in turn and recording the previous barcode.
S1133, judging whether the current barcode is an end code; if the current barcode is not an end code, performing step S1134, if the current barcode is an end code, performing step S1135;
that is, according to the sequence of acquisition time from early to late, whether each piece of second order information is the piece of end identification information is determined;
S1134, judging whether a time interval between the previous and current barcode scanning is within a threshold; if it is within the threshold, returning back to execute step S1132, if it is not within the threshold, executing step S1136;
S1135, recording the end code, jumping out of the searching logic, and stopping traversing; taking the end code time as an operator's scanning end time;
S1136, after the previous barcode is recorded, jumping out of the searching logic and stopping traversing, and taking the time of the previous record as an operator's scanning end time;
S1137, extracting the operator's scanning end time;
that is, if the piece of second order information is the piece of end identification information, determining the acquisition time of the piece of second order information as the processing end time; if the piece of second order information is not the piece of end identification information, determining whether the acquisition time interval between the piece of second order information and the piece of second target order information is greater than a first preset interval, wherein the piece of second target order information is the piece of order information with the latest acquisition time in the pieces of order information with acquisition times earlier than that of the piece of second order information; if the acquisition time interval is greater than the first preset interval, determining the acquisition time of the piece of second target order information as the processing end time.

After the above flow, the server can perform the following steps:
S1104, searching the video recording storage device for the video recordings between time A and time B from all the cameras in the list (List Cameras)and feeding it back to the client, wherein the video recording start time *time A* equals to the operator's scanning start time minus the first threshold, the video recording end time *time B* equals to the operator's scanning end time plus the second threshold, and the List Cameras are all cameras associated with the packaging table;
that is, the monitoring videos captured by multiple monitoring devices corresponding to the target processing table from the video recording start time to the video recording end time is acquired from the pre-stored monitoring videos, Wherein the video recording start time is obtained by subtracting a first threshold from the processing start time, and the video recording end time is obtained by adding a second threshold to the processing end time.
S1105, displaying a number of playing windows automatically according to the number of cameras after receiving the video recording, and playing all the video recordings synchronously from the time of the operator's scanning start time, wherein a progress bar of the video recording displays the video recording in the time span from time A to time B, the progress bar from time A to time B is displayed so that if the user wants to see a previous duration of video recording to the scanning start time, he/she can quickly view the video recording by manually dragging the progress bar forward;
that is, multi-playing windows playing mode is adopted to play the monitoring videos from the processing start time, and the playing progress bar is displayed, wherein each playing window is used to play the video captured by the corresponding monitoring device, and the duration of the playing progress bar is from the video recording start time to the video recording end time.
S1106, end of flow.

In this embodiment, the monitoring video corresponding to the target order that the user wants to query can be acquired without manually querying, viewing and cutting, which greatly improves the efficiency of video query.

An embodiment of the present application further provides a logistics monitoring system. The logistics monitoring system provided by the embodiment of the application is introduced below.

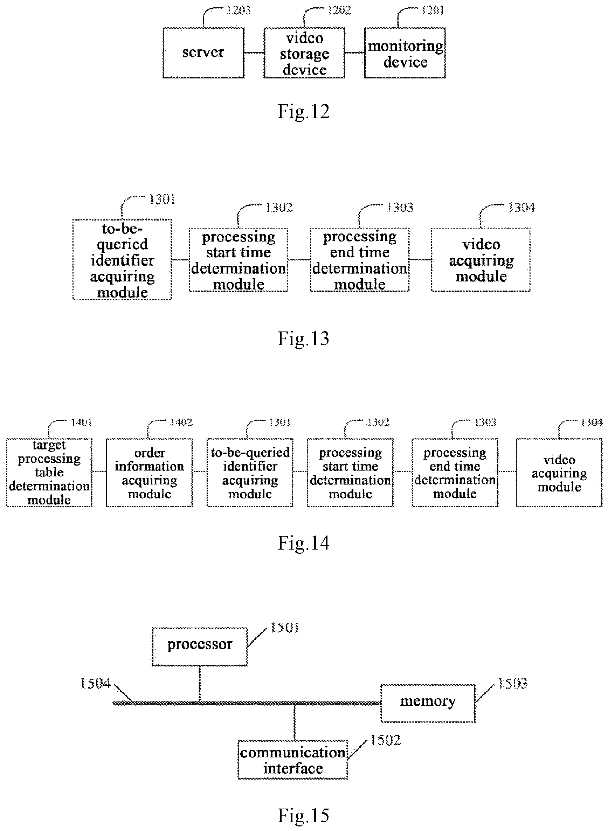

As shown in Fig. 12, the logistics monitoring system includes: a monitoring device 1201, a video storage device 1202 and a server 1203, wherein:
the monitoring device 1201 is configured to monitor a procedure of processing an item included in an order, obtain a monitoring video, and send the monitoring video to the video storage device 1202;
the video storage device 1202 is configured to receive the monitoring video and store the monitoring video;
the server 1203 is configured to acquire a to-be-queried identifier, determine, from pre-recorded pieces of information of orders, an acquisition time of a first piece of order information corresponding to a target order as a processing start time; determine an acquisition time of a last piece of order information corresponding to the target order as a processing end time; acquire a monitoring video corresponding to the target order from the video storage device 1202 based on the processing start time and the processing end time;
wherein the to-be-queried identifier is an item identifier or an order identifier, wherein the target order is an order to which the to-be-queried identifier belongs, a piece of order information for an order includes a piece of information corresponding to an item identifier belong to the order and/or a piece of information corresponding to an order identifier belong to the order.

In the solution provided in the embodiment of the application, the logistics monitoring system may include a monitoring device, a video storage device and a server. The monitoring device may monitor the procedure of processing the item included in the order, obtain the monitoring video and send the same to the video storage device; the video storage device can receive the monitoring video and store the monitoring video. The server can acquire the to-be-queried identifier, determine the acquisition time of the first piece of order information included in the target order as the processing start time from the pre-recorded pieces of information of the orders, and then determine the acquisition time of the last piece of order information included in the target order as the processing end time, and acquire the monitoring video corresponding to the target order from the video storage device based on the processing start time and processing end time. The monitoring video corresponding to the target order that the user wants to query can be acquired without manually querying, viewing and cutting, which greatly improves the efficiency of video query.

The first piece of order information can be a piece of order information next to a piece of end identification information with a latest acquisition time prior to an acquisition time of the piece of information corresponding to the to-be-queried identifier, and the first piece of order information has an acquisition time later than the acquisition time of said piece of end identification information, wherein, the piece of end identification information is used to indicate a completion of acquiring the pieces of order information of any order; or, the piece of first order information can be a piece of order information with a later acquisition time in target adjacent pieces of order information with latest acquisition times prior to an acquisition time of the piece of information corresponding to the to-be-queried identifier, wherein the target adjacent pieces of order information are two adjacent pieces of order information with an acquisition time interval greater than a first preset interval; and/or,
the last piece of order information can be a piece of end identification information with an earliest acquisition time after an acquisition time of the piece of information corresponding to the to-be-queried identifier; or, the last piece of order information can be a piece of order information with an earlier acquisition time in the target adjacent piece of order information with an earliest acquisition time after an acquisition time of the piece of information corresponding to the to-be-queried identifier.

As an implementation of the embodiment of the present application, the server 1203 can specifically be configured to determine all pieces of first order information within a first preset duration before the acquisition time of the piece of information corresponding to the to-be-queried identifier; determine whether each piece of first order information is the piece of end identification information according to a time sequence of acquisition times from late to early; if the piece of first order information is the piece of end identification information, determine an acquisition time of the piece of first target order information as the processing start time, wherein the piece of first target order information is a piece of order information with an earliest acquisition time in pieces of order information with the acquisition times later than that of the piece of first order information; if the piece of first order information is not the piece of end identification information, determine whether an acquisition time interval between the piece of first order information and the piece of first target order information is greater than the first preset interval; if the acquisition time interval is greater than the first preset interval, determine an acquisition time of the piece of first target order information as the processing start time.

As an implementation of the embodiment of the present application, the server 1203 can be configured to sort all pieces of first order information in reverse time sequence of the acquisition times to obtain a first list, traverse each piece of first order information in the first list, and determine whether the pieces of first order information is a pieces of end identification information.

As an implementation of the embodiment of the present application, the server 1203 can specifically be configured to determine all pieces of second order information within the first preset duration after the acquisition time of the piece of information corresponding to the to-be-queried identifier; determine whether each piece of second order information is the piece of end identification information according to a time sequence of the acquisition times from early to late; if the piece of second order information is the piece of end identification information, determine an acquisition time of the piece of second target order information as the processing end time; if the piece of second order information is not the piece of end identification information, determine whether an acquisition time interval between the piece of second order information and the piece of second target order information is greater than the first preset interval, wherein the piece of second target order information is a piece of order information with a latest acquisition time in the pieces of order information with the acquisition times earlier than that of the piece of second order information; if the acquisition time interval is greater than the first preset interval, determine an acquisition time of the piece of second target order information as the processing end time.

As an implementation of the embodiment of the present application, the server 1203 can be configured to sort all pieces of second order information in time sequence of the acquisition times to obtain a second list, traverse each piece of second order information in the second list, and determine whether the piece of second order information is a piece of end identification information.

The pre-recorded piece of order information of the order can be a piece of scanning code information of the item identifier and/or a piece of scanning code information of the order identifier acquired during a procedure of processing an item included in the order, the piece of end identification information is a piece of scanning code information of the end code set on a processing table for processing the item, the acquisition time of the piece of order information can be a scanning time of a corresponding piece of scanning code information.

As an implementation of the embodiment of the present application, the item included in the order can be processed on the processing table, and the piece of order information can be associated with the processing table processing the order, the processing table can be associated with multiple monitoring devices, the processing table can include a packaging table for packaging the item included in the order;
the server 1203 can further be configured to, prior to the step of the determining, from the pre-recorded pieces of order information of the orders, the acquisition time of the first piece of order information included in the target order, search for a target processing table associated with the piece of information corresponding to the to-be-queried identifier; acquire pre-recorded pieces of order information of the orders processed at the target processing table.

As an embodiment of the application, the server 1203 can specifically be configured to determine the multiple monitoring devices corresponding to the target processing table associated with the piece of information corresponding to the to-be-queried identifier; acquire the monitoring videos captured by the multiple monitoring devices based on the processing start time and the processing end time.

As an embodiment of the application, the server 1203 can specifically be configured to play the monitoring videos by applying a multi-playing windows playing mode, or, send the monitoring videos to a playing device to cause the playing device to play the monitoring videos in a multi-playing windows playing mode, wherein each playing window is configured to play the video captured by a corresponding monitoring device.

As an implementation of the embodiment of the present application, the server 1203 can specifically be configured to acquire a monitoring video from a video recording start time to a video recording end time from a pre-stored monitoring video.

Wherein the video recording start time is obtained by subtracting a first threshold from the processing start time, and/or, the video recording end time is obtained by adding a second threshold to the processing end time.

As an implementation of the embodiment of the present application, the logistics monitoring system can further include a playing device, the server 1203 can specifically be configured to play the monitoring video starting from the processing start time and display a playing progress bar, playing, when an playing progress adjustment instruction for the playing progress bar is acquired, a monitoring video at the time corresponding to the playing progress bar after the playing progress adjustment instruction is executed, wherein a duration corresponding to the playing progress bar is from the video recording start time to the video recording end time, after the playing progress adjustment instruction is executed, the time corresponding to the playing progress bar is located between the video recording start time and the video recording end time; or,
control the playing device to play the monitoring video starting from the processing start time and display a playing progress bar, so that when the playing device acquires an playing progress adjustment instruction for the playing progress bar, the playing device plays a monitoring video at the time corresponding to the playing progress bar after the playing progress adjustment instruction is executed.

Corresponding to the above video query method, the embodiment of the present application further provides a video query apparatus. The video query apparatus provided in the embodiment of the present application is introduced in the following.

As shown in Fig. 13, a video query apparatus, the apparatus includes:
a to-be-queried identifier acquiring module 1301, configured for acquiring a to-be-queried identifier,
wherein the to-be-queried identifier is an item identifier or an order identifier;
a processing start time determination module 1302, configured for determining, from pre-recorded pieces of order information of orders, an acquisition time of a first piece of order information corresponding to a target order as a processing start time;
wherein the target order is an order to which the to-be-queried identifier belongs, the piece of order information for an order includes a piece of information corresponding to an item identifier belong to the order and/or a piece of information corresponding to an order identifier belong to the order;
a processing end time determination module 1303, configured for determining an acquisition time of a last piece of order information corresponding to the target order as a processing end time;
a video acquiring module 1304, configured for acquiring a monitoring video corresponding to the target order based on the processing start time and the processing end time.

In the solution provided by the embodiment of the present application, the server can acquire the to-be-queried identifier, wherein the to-be-queried identifier is an item identifier or an order identifier; determine, from the pre-recorded pieces of order information of orders, an acquisition time of a first piece of order information corresponding to a target order as a processing start time, wherein the target order is an order to which the to-be-queried identifier belongs, the piece of order information for the order includes a piece of information corresponding to an item identifier belong to the order and/or a piece of information corresponding to an order identifier belong to the order; determine an acquisition time of the last piece of order information corresponding to the target order as a processing end time; acquire a monitoring video corresponding to the target order based on the processing start time and the processing end time. Through the pre-recorded pieces of order information of the orders, the processing start time and the processing end time of the order to which the to-be-queried identifier belongs could be determined, so that the monitoring video corresponding to the order to which the to-be-queried identifier belongs could be acquired. The monitoring video corresponding to the target order that the user wants to query can be acquired without manually querying, viewing and cutting, which greatly improves the efficiency of video query.

As an implementation of the embodiment of the present application, the first piece of order information can be a piece of order information next to a piece of end identification information with a latest acquisition time prior to an acquisition time of the piece of information corresponding to the to-be-queried identifier, and the first piece of order information has an acquisition time later than the acquisition time of said piece of end identification information, wherein, the piece of end identification information is used to indicate a completion of acquiring the pieces of order information of any order. Or, the first piece of order information can be a piece of order information with a later acquisition time in target adjacent pieces of order information with a latest acquisition time prior to an acquisition time of the piece of information corresponding to the to-be-queried identifier, wherein the target adjacent pieces of order information are two adjacent pieces of order information with an acquisition time interval greater than a first preset interval; and/or,
the last piece of order information can be a piece of end identification information with an earliest acquisition time after an acquisition time of the piece of information corresponding to the to-be-queried identifier; or, the last piece of order information can be a piece of order information with an earlier acquisition time in the target adjacent pieces of order information with an earliest acquisition time after an acquisition time of the piece of information corresponding to the to-be-queried identifier.

As an implementation of the embodiment of the present application, the processing start time determination module 1302 may include:
a first order information determination unit, configured for determining all pieces of first order information within a first preset duration before the acquisition time of the piece of information corresponding to the to-be-queried identifier;
a first end identification information determination unit, configured for determining whether each piece of first order information is the piece of end identification information according to a time sequence of acquisition times from late to early;
a first processing start time determination unit, configured for if the piece of first order information is the piece of end identification information, determining an acquisition time of the piece of first target order information as the processing start time, wherein the piece of first target order information is a piece of order information with an earliest acquisition time in pieces of order information with the acquisition times later than that of the piece of first order information;
a first judgment unit, configured for if the piece of first order information is not the piece of end identification information, determining whether an acquisition time interval between the piece of first order information and the piece of first target order information is greater than the first preset interval;
a second processing start time determination unit, configured for if the acquisition time interval is greater than the first preset interval, determining an acquisition time of the piece of first target order information as the processing start time.

As an implementation of the embodiment of the present application, the processing end time determination module 1303 can include:
a second order information determination unit, configured for determining all pieces of second order information within the first preset duration after the acquisition time of the piece of information corresponding to the to-be-queried identifier;
a second end identification information determination unit, configured for determining whether each piece of second order information is the piece of end identification information according to a time sequence of the acquisition times from early to late;
a first processing end time determination unit, configured for if the piece of second order information is the piece of end identification information, determining an acquisition time of the piece of second target order information as the processing end time;
a second judgment unit, configured for if the piece of second order information is not the piece of end identification information, determining whether an acquisition time interval between the piece of second order information and the piece of second target order information is greater than the first preset interval, wherein the piece of second target order information is a piece of order information with a latest acquisition time in the pieces of order information with the acquisition times earlier than that of the piece of second order information;
a second processing end time determination unit, configured for if the acquisition time interval is greater than the first preset interval, determining an acquisition time of the piece of second target order information as the processing end time.

As an implementation of the embodiment of the present application, the pre-recorded piece of order information of the order is a piece of scanning code information of the item identifier and/or a piece of scanning code information of the order identifier acquired during a procedure of processing an item included in the order, the acquisition time of the piece of order information is a scanning time of the corresponding piece of scanning code information.

As an implementation of the embodiment of the present application, the item included in the order can be processed on the processing table, and the piece of order information can be associated with the processing table that processes the order; as shown in Fig. 14, the above apparatus can further include:
a target processing table determination module 1401, configured for, prior to the step of determining, from the pre-recorded pieces of order information of the order, the acquisition time of the first piece of order information comprised in the target order, searching for a target processing table associated with the piece of information corresponding to the to-be-queried identifier;
an order information acquiring module 1402, configured for acquiring pre-recorded pieces of order information of the orders processed at the target processing table;

As an implementation of the embodiment of the present application, the processing table can be associated with multiple monitoring devices, the video acquiring module 1304 can include:
an associated monitoring device determination unit, configured for determining the multiple monitoring devices corresponding to the target processing table associated with the piece of information corresponding to the to-be-queried identifier;
a first video acquiring unit, configured for acquiring monitoring videos captured by the multiple monitoring devices based on the processing start time and the processing end time.

The apparatus can further include:
a first playing module, configured for playing the monitoring videos by applying a multi-playing windows playing mode, or, sending the monitoring videos to a playing device to cause the playing device to play the monitoring videos in a multi-playing windows playing mode, wherein each playing window is configured to play a video captured by a corresponding monitoring device.

As an implementation of the embodiment of the present application, the processing table can include a packaging table for packaging the item included in the order.

As an implementation of the embodiment of the present application, the video acquiring module 1304 can include:
a second video acquiring unit, configured for acquiring a monitoring video from a video recording start time to a video recording end time from a pre-stored monitoring video, wherein the video recording start time is obtained by subtracting a first threshold from the processing start time, and/or, the video recording end time is obtained by adding a second threshold to the processing end time.

As an implementation of the embodiment of the present application, the apparatus can further include:
a second playing module, configured for playing the monitoring video starting from the processing start time and displaying a playing progress bar, playing, when an playing progress adjustment instruction for the playing progress bar is acquired, a monitoring video at the time corresponding to the playing progress bar after the playing progress adjustment instruction is executed, wherein a duration corresponding to the playing progress bar is from the video recording start time to the video recording end time, after the playing progress adjustment instruction is executed, the time corresponding to the playing progress bar is located between the video recording start time and the video recording end time; or, controlling the playing device to play the monitoring video starting from the processing start time and displaying a playing progress bar, so that when an playing progress adjustment instruction for the playing progress bar is acquired, the playing device plays a monitoring video at the time corresponding to the playing progress bar after the playing progress adjustment instruction is executed.

An embodiment of the present application further provides an electronic device, including a processor and a memory, wherein the memory is configured for storing a computer program; the processor is configured for carrying out the steps of the method according to any one of the above embodiments when executing the program stored in the memory.

The electronic device can be a server, as shown in Fig. 15, including a processor 1501, a communication interface 1502, a memory 1503 and a communication bus 1504, wherein the processor 1501, the communication interface 1502 and the memory 1503 communicate with each other through the communication bus 1504,
the memory 1503 is configured for storing a computer program;
the processor 1501 is configured for carrying out the steps of the method according to any one of the embodiments when executing the program stored in the memory 1503.

The communication bus mentioned by the above server can be a Peripheral Component Interconnect (PCI) bus or an Extended Industry Standard Architecture (EISA) bus, etc. The communication bus can be divided into address bus, data bus, control bus and so on. For ease of presentation, it is only represented by a thick line is shown in the figure, but this does not mean that there is only a bus or a type of bus.

The communication interface is used for communication between the aforementioned server and other devices.

The memory may include a Random Access Memory (RAM) or a Non-Volatile Memory (NVM), such as at least one disk memory. Optionally, the memory may also be at least a storage device located away from the processor.

The above processor can be general-purpose processors, including a Central Processing Unit (CPU), Network Processor (NP), etc. It can also be Digital Signal Processor (DSP), Application Specific Integrated Circuit (ASIC), Field-Programmable Gate Array (FPGA) or other programmable logic devices, discrete gates or transistor logic devices, discrete hardware components.

In a further embodiment provided by the present application, a computer-readable storage medium is further provided, which has a computer program stored thereon, and the computer program, when executed by a processor, carries out the steps of the method according to any one of the above embodiments.

In a further embodiment provided by the present application, a computer program product including instructions is further provided, which, when running on a computer, causes the computer to carry out the steps of the method according to any one of the above embodiments.

The above embodiments may be implemented in whole or in part by software, hardware, firmware, or any combination thereof. When implemented using software, it can be implemented in whole or in part in the form of a computer program product. The computer program product includes one or more computer instructions. When the computer program instruction(s) is/are loaded and executed on a computer, the process or function described in the embodiment of the present application is produced in whole or in part. The computer may be a general-purpose computer, a special-purpose computer, a computer network, or other programmable device. The computer instruction(s) may be stored in the computer-readable storage medium or transmitted from one computer-readable storage medium to another, for example, the computer instruction(s) may be transmitted from one web site, computer, server, or data center to another web site, computer, server, or data center by wired (e.g., coaxial cable, fiber optic, digital subscriber line (DSL)) or wireless (e.g., infrared, wireless, microwave, etc.) means. The computer-readable storage medium can be any available medium that the computer can access or a data storage device such as a server or a data center containing one or more integrated available media. The available medium may be a magnetic medium (e.g., a floppy disk, hard disk, tape), an optical medium (e.g., a DVD), or a semiconductor medium (e.g., a Solid State Disk (SSD)).

It should be noted that in this specification, relation terms such as first and second are used only to distinguish one entity or operation from another and do not necessarily require or imply the existence of any such actual relationship or ordering between these entities or operations. Furthermore, the terms "include", "comprise", or any other variation thereof are intended to cover non-exclusive inclusion such that a procedure, method, article or apparatus including a set of elements includes not only those elements but also other elements not expressly recited, or further including elements which are inherent to such procedure, method, article or apparatus. In the absence of further limitations, the statement "includes a..." defining an element does not exclude the existence of other identical element(s) in the procedure, method, article or apparatus including the element.

Each embodiment in the specification is described in a relevant way, and the same and similar parts among the embodiments can be referred to each other. Each embodiment focuses on the differences from other embodiments. In particular, for embodiments of the apparatus, logistics monitoring system, electronic device, computer-readable storage medium and computer program product, the description is relatively simple because they are basically similar to the method embodiment, and the relevant contents can refer to the corresponding parts of the method embodiment.

The above is only a preferred embodiment of the present application and is not intended to limit the scope of protection of the present application. Any modification, equivalent replacement, improvement, etc. made within the spirit and principle of the present application shall be included in the scope of protection of the present application.

## Claims

1. A video query method, comprising:
acquiring a to-be-queried identifier, wherein the to-be-queried identifier is an item identifier or an order identifier;
determining, from pre-recorded pieces of order information of orders, an acquisition time of a first piece of order information corresponding to a target order as a processing start time, wherein the target order is an order to which the to-be-queried identifier belongs, and a piece of order information for an order comprises a piece of information corresponding to an item identifier belonging to the order and/or a piece of information corresponding to an order identifier belonging to the order;
determining an acquisition time of a last piece of order information corresponding to the target order as a processing end time;
acquiring a monitoring video corresponding to the target order based on the processing start time and the processing end time.

2. The method according to claim 1, wherein the first piece of order information is a piece of order information next to a piece of end identification information with a latest acquisition time prior to an acquisition time of a piece of information corresponding to the to-be-queried identifier, and the first piece of order information has an acquisition time later than the acquisition time of said piece of end identification information, wherein, a piece of end identification information is used to indicate a completion of acquiring all pieces of order information of any order; or, the first piece of order information is a piece of order information with a later acquisition time in target adjacent pieces of order information with a latest acquisition time prior to an acquisition time of a piece of information corresponding to the to-be-queried identifier, wherein the target adjacent pieces of order information are two adjacent pieces of order information with an acquisition time interval greater than a first preset interval; and/or,
the last piece of order information is a piece of end identification information with an earliest acquisition time after an acquisition time of a piece of information corresponding to the to-be-queried identifier; or, the last piece of order information is a piece of order information with an earlier acquisition time in target adjacent pieces of order information with an earliest acquisition time after an acquisition time of a piece of information corresponding to the to-be-queried identifier.

3. The method according to claim 2, wherein the step of determining, from the pre-recorded pieces of order information of the orders, the acquisition time of the first piece of order information corresponding to the target order as the processing start time, comprises:
determining all pieces of first order information within a first preset duration before the acquisition time of the piece of information corresponding to the to-be-queried identifier;
determining whether each piece of first order information is the piece of end identification information according to a time sequence of acquisition times from late to early;
if the piece of first order information is the piece of end identification information, determining an acquisition time of a piece of first target order information as the processing start time, wherein the piece of first target order information is a piece of order information with an earliest acquisition time in pieces of order information with acquisition times later than that of the piece of first order information;
if the piece of first order information is not the piece of end identification information, determining whether an acquisition time interval between the piece of first order information and the piece of first target order information is greater than the first preset interval;
if the acquisition time interval is greater than the first preset interval, determining the acquisition time of the piece of first target order information as the processing start time; and/or,
the step of determining the acquisition time of the last piece of order information corresponding to the target order as the processing end time, comprises:
determining all pieces of second order information within a first preset duration after the acquisition time of the piece of information corresponding to the to-be-queried identifier;
determining whether each piece of second order information is the piece of end identification information according to a time sequence of acquisition times from early to late;
if the piece of second order information is the piece of end identification information, determining an acquisition time of a piece of second target order information as the processing end time;
if the piece of second order information is not the piece of end identification information, determining whether an acquisition time interval between the piece of second order information and the piece of second target order information is greater than the first preset interval, wherein the piece of second target order information is a piece of order information with a latest acquisition time in pieces of order information with acquisition times earlier than that of the piece of second order information;
if the acquisition time interval is greater than the first preset interval, determining the acquisition time of the piece of second target order information as the processing end time.

4. The method according to claim 2, wherein a pre-recorded piece of order information of an order is a piece of scanning code information of an item identifier and/or a piece of scanning code information of an order identifier acquired during a procedure of processing an item comprised in the order, the piece of end identification information is a piece of scanning code information of an end code set on a processing table for processing the item, an acquisition time of a piece of order information is a scanning time of a corresponding piece of scanning code information.

5. The method according to any one of claims 1-4, wherein an item comprised in the order is processed on a processing table, and the piece of order information is associated with the processing table processing the order;
prior to the step of determining, from the pre-recorded pieces of order information of the orders, the acquisition time of the first piece of order information corresponding to the target order, the method further comprises:
searching for a target processing table associated with the piece of information corresponding to the to-be-queried identifier;
acquiring pre-recorded pieces of order information of orders processed at the target processing table;
the processing table is associated with multiple monitoring devices, and the step of acquiring the monitoring video corresponding to the target order based on the processing start time and the processing end time, comprises:
determining multiple monitoring devices corresponding to the target processing table associated with the piece of information corresponding to the to-be-queried identifier;
acquiring monitoring videos captured by the multiple monitoring devices based on the processing start time and the processing end time;
the method further comprises:
playing the monitoring videos by applying a multi-playing windows playing mode, or, sending the monitoring videos to a playing device to cause the playing device to play the monitoring videos in a multi-playing windows playing mode, wherein each playing window is configured to play a video captured by a corresponding monitoring device;
the processing table comprises a packaging table for packaging the item comprised in the order.

6. The method according to any one of claims 1-4, wherein the step of acquiring the monitoring video corresponding to the target order based on the processing start time and the processing end time, comprises:
acquiring a monitoring video from a video recording start time to a video recording end time from a pre-stored monitoring video, wherein the video recording start time is obtained by subtracting a first threshold from the processing start time, and/or, the video recording end time is obtained by adding a second threshold to the processing end time.

7. The method according to claim 6, wherein the method further comprises:
playing the monitoring video starting from the processing start time and displaying a playing progress bar; playing, when a playing progress adjustment instruction for the playing progress bar is acquired, a monitoring video at a time corresponding to the playing progress bar after the playing progress adjustment instruction is executed, wherein a duration corresponding to the playing progress bar is from the video recording start time to the video recording end time, and the time corresponding to the playing progress bar after the playing progress adjustment instruction is executed is located between the video recording start time and the video recording end time; or,
controlling the playing device to play the monitoring video starting from the processing start time and displaying a playing progress bar, so that when a playing progress adjustment instruction for the playing progress bar is acquired, the playing device plays a monitoring video at a time corresponding to the playing progress bar after the playing progress adjustment instruction is executed.

8. A video query apparatus, wherein the apparatus comprises:
a to-be-queried identifier acquiring module, configured for acquiring a to-be-queried identifier, wherein the to-be-queried identifier is an item identifier or an order identifier;
a processing start time determination module, configured for determining, from pre-recorded pieces of order information of orders, an acquisition time of a piece of first order information corresponding to a target order as a processing start time, wherein the target order is an order to which the to-be-queried identifier belongs, and a piece of order information for an order comprises a piece of information corresponding to an item identifier belong to the order and/or a piece of information corresponding to an order identifier belong to the order;
a processing end time determination module, configured for determining an acquisition time of a last piece of order information corresponding to the target order as a processing end time;
a video acquiring module, configured for acquiring a monitoring video corresponding to the target order based on the processing start time and the processing end time.

9. The apparatus according to claim 8, wherein
the first piece of order information is a piece of order information next to a piece of end identification information with a latest acquisition time prior to an acquisition time of a piece of information corresponding to the to-be-queried identifier, and the first piece of order information has an acquisition time later than the acquisition time of said piece of end identification information, wherein, a piece of end identification information is used to indicate a completion of acquiring all pieces of order information of any order; or, the first piece of order information is a piece of order information with a later acquisition time in target adjacent pieces of order information with a latest acquisition time prior to an acquisition time of a piece of information corresponding to the to-be-queried identifier, wherein the target adjacent pieces of order information are two adjacent pieces of order information with an acquisition time interval greater than a first preset interval; and/or,
the last piece of order information is a piece of end identification information with an earliest acquisition time after an acquisition time of a piece of information corresponding to the to-be-queried identifier; or, the last piece of order information is a piece of order information with an earlier acquisition time in target adjacent pieces of order information with an earliest acquisition time after an acquisition time of a piece of information corresponding to the to-be-queried identifier;
the processing start time determination module comprises:
a first order information determination unit, configured for determining all pieces of first order information within a first preset duration before the acquisition time of the piece of information corresponding to the to-be-queried identifier;
a first end identification information determination unit, configured for determining whether each piece of first order information is the piece of end identification information according to a time sequence of acquisition times from late to early;
a first processing start time determination unit, configured for, if the piece of first order information is the piece of end identification information, determining an acquisition time of a piece of first target order information as the processing start time, wherein the piece of first target order information is a piece of order information with an earliest acquisition time in pieces of order information with acquisition times later than that of the piece of first order information;
a first judgment unit, configured for, if the piece of first order information is not the piece of end identification information, determining whether an acquisition time interval between the piece of first order information and the piece of first target order information is greater than the first preset interval;
a second processing start time determination unit, configured for, if the acquisition time interval is greater than the first preset interval, determining the acquisition time of the piece of first target order information as the processing start time; and/or,
the processing end time determination module comprises:
a second order information determination unit, configured for determining all pieces of second order information within a first preset duration after the acquisition time of the piece of information corresponding to the to-be-queried identifier;
a second end identification information determination unit, configured for determining whether each piece of second order information is the piece of end identification information according to a time sequence of acquisition times from early to late;
a first processing end time determination unit, configured for, if the piece of second order information is the piece of end identification information, determining an acquisition time of a piece of second target order information as the processing end time;
a second judgment unit, configured for, if the piece of second order information is not the piece of end identification information, determining whether an acquisition time interval between the piece of second order information and the piece of second target order information is greater than the first preset interval, wherein the piece of second target order information is a piece of order information with a latest acquisition time in pieces of order information with acquisition times earlier than that of the piece of second order information;
a second processing end time determination unit, configured for, if the acquisition time interval is greater than the first preset interval, determining the acquisition time of the piece of second target order information as the processing end time;
a pre-recorded piece of order information of an order is a piece of scanning code information of an item identifier and/or a piece of scanning code information of an order identifier acquired during a procedure of processing an item comprised in the order, the piece of end identification information is a piece of scanning code information of an end code set on a processing table for processing the item, an acquisition time of a piece of order information is a scanning time of a corresponding piece of scanning code information;
an item comprised in the order is processed on a processing table, and the piece of order information is associated with the processing table processing the order; the apparatus further comprises:
a target processing table determination module, configured for, prior to the step of determining, from the pre-recorded pieces of order information of the orders, the acquisition time of the first piece of order information corresponding to the target order, searching for a target processing table associated with the piece of information corresponding to the to-be-queried identifier;
an order information acquiring module, configured for acquiring pre-recorded pieces of order information of orders processed at the target processing table;
the processing table is associated with multiple monitoring devices, the video acquiring module comprises:
an associated monitoring device determination unit, configured for determining multiple monitoring devices corresponding to the target processing table associated with the piece of information corresponding to the to-be-queried identifier;
a first video acquiring unit, configured for acquiring monitoring videos captured by the multiple monitoring devices based on the processing start time and the processing end time;
the apparatus further comprises:
a first playing module, configured for playing the monitoring videos by applying a multi-playing windows playing mode, or, sending the monitoring videos to a playing device to cause the playing device to play the monitoring videos in a multi-playing windows playing mode, wherein each playing window is configured to play a video captured by a corresponding monitoring device;
the processing table comprises a packaging table for packaging the item comprised in the order;
the video acquiring module comprises:
a second video acquiring unit, configured for acquiring a monitoring video from a video recording start time to a video recording end time from a pre-stored monitoring video, wherein the video recording start time is obtained by subtracting a first threshold from the processing start time, and/or, the video recording end time is obtained by adding a second threshold to the processing end time;
the apparatus further comprises:
a second playing module, configured for playing the monitoring video starting from the processing start time and displaying a playing progress bar; playing, when a playing progress adjustment instruction for the playing progress bar is acquired, a monitoring video at a time corresponding to the playing progress bar after the playing progress adjustment instruction is executed, wherein a duration corresponding to the playing progress bar is from the video recording start time to the video recording end time, and the time corresponding to the playing progress bar after the playing progress adjustment instruction is executed is located between the video recording start time and the video recording end time; or,
controlling the playing device to play the monitoring video starting from the processing start time and displaying a playing progress bar, so that when a playing progress adjustment instruction for the playing progress bar is acquired, the playing device plays a monitoring video at a time corresponding to the playing progress bar after the playing progress adjustment instruction is executed.

10. A logistics monitoring system, wherein the system comprises: a monitoring device, a video storage device and a server, wherein:
the monitoring device is configured for monitoring a procedure of processing an item comprised in an order, to obtain a monitoring video, and sending the monitoring video to the video storage device;
the video storage device is configured for receiving the monitoring video and storing the monitoring video;
the server is configured for acquiring a to-be-queried identifier, determining, from pre-recorded pieces of order information of orders, an acquisition time of a first piece of order information corresponding to a target order as a processing start time; determining an acquisition time of a last piece of order information corresponding to the target order as a processing end time; acquiring a monitoring video corresponding to the target order from the video storage device based on the processing start time and the processing end time, wherein the to-be-queried identifier is an item identifier or an order identifier, wherein the target order is an order to which the to-be-queried identifier belongs, and a piece of order information for an order comprises a piece of information corresponding to an item identifier belong to the order and/or a piece of information corresponding to an order identifier belong to the order.

11. An electronic device, comprising a processor and a memory, wherein the memory is configured for storing a computer program;
the processor is configured for carrying out steps of the method according to any one of claims 1-7 when executing the program stored in the memory.

12. A computer program product containing instructions, which, when running on a computer, causes the computer to carry out steps of the method according to any one of claims 1-7.

13. A computer-readable storage medium having a computer program stored thereon, wherein the computer program, when executed by a processor, carries out steps of the method according to any one of claims 1-7.
